# EUROPÄISCHE PATENTSCHRIFT

(11) **EP 2 405 150 B1**
(45) Veröffentlichungstag und Bekanntmachung des Hinweises auf die Patenterteilung: **27.12.2017**
(21) Anmeldenummer: 11172377.1
(22) Anmeldetag: 01.07.2011
(51) Int. Cl.: F16B 37/12

(54) **Gewindepanzerndes Element, Schraube mit gewindepanzerndem Element, Installationsverfahren dafür sowie ein Bauteil mit installiertem gewindepanzernden Element**
Thread-armouring element, screw with thread-armouring element, installation method for same and a component with installed thread-armouring element
Elément à blindage fileté, vis dotée d'un élément à blindage fileté, procédé d'installation pour celui-ci et composant doté d'un élément à blindage fileté installé

(30) Priorität: 05.07.2010 DE 102010017739
(43) Veröffentlichungstag der Anmeldung: 11.01.2012
(73) Patentinhaber: Böllhoff Verbindungstechnik GmbH, 33649 Bielefeld (DE)
(72) Erfinder: Marxkors, Andreas, 33161 Hövelhof (DE); Tovar, Francisco, 33659 Bielefeld (DE); Dörr, Ralf, 33739 Bielefeld (DE)
(74) Vertreter: Heyer, Volker

(56) Entgegenhaltungen:
- AU-B2- 426 327
- GB-A- 857 058
- JP-A- 2000 130 424
- US-A- 2 874 741
- US-A- 3 459 248

## Beschreibung

### 1. Gebiet der Erfindung

Die vorliegende Erfindung betrifft ein gewindepanzerndes Element, eine Schraube mit gewindepanzerndem Element, ein Installationsverfahren für ein gewindepanzerndes Element in einer Öffnung eines Bauteils sowie das Bauteil mit installiertem gewindepanzerndem Element.

### 2. Hintergrund der Erfindung

Gewindepanzernde Elemente, die auch als Drahtgewindeeinsätze bezeichnet werden, sind allgemein im Stand der Technik bekannt. So gibt es unterschiedlichste Materialgestaltungen der gewindepanzernden Elemente, die in Abhängigkeit von dem jeweiligen Anwendungsgebiet variieren. Des Weiteren variieren die gewindepanzernden Elemente in ihrer Form, um unterschiedliche Einbauvarianten zu unterstützen.

Zum Einbringen des gewindepanzernden Elements in eine Öffnung mit oder ohne Aufnahmegewinde eines Bauteils sind zwei Montagearten üblich. Bei der einen Montageart ist der wendelförmige Draht des gewindepanzernden Elements mit einer Mitnahme-Kerbe versehen. Über diese Mitnahme-Kerbe schleppt ein Einbauwerkzeug das gewindepanzernde Element mit und dreht es in das Aufnahmegewinde der Öffnung des Bauteils ein. Dies ist beispielsweise in US 4,563,119, US 4,645,398 und US 4,553,303 beschrieben. Bei der anderen Montageart ist das gewindepanzernde Element an einem Ende mit einem diagonal verlaufenden Mitnahme-Zapfen versehen. Das Einbauwerkzeug greift an diesem Mitnahmezapfen an, um das gewindepanzernde Element mitzuschleppen und hierdurch in das Gewinde der Öffnung einzudrehen. Dies ist beispielsweise in US 2,152,681, US 2,363,663 beschrieben. EP 1 897 659 wiederum beschreibt eine spezielle Einbauspindel zur Installation von gewindepanzernden Elementen.

Gewindepanzernde Elemente weisen zudem bezogen auf ihren Innendurchmesser verkleinerte Windungen auf, die als sogenannte Schrauben-Sicherungen (screw-lock) dienen. US 6,421,899 offenbart dazu beispielsweise eine oder mehrere Windungen, die als radial nach innen versetztes Sechseck innerhalb des gewindepanzernden Elements ausgebildet sind. Diese Schrauben-Sicherungen halten eingeschraubte Schrauben mittels Kraftschluss, um beispielsweise einen Vormontage-Zustand zu unterstützen.

Ein gewindepanzerndes Element mit verengten wendelförmigen Windungen ist in US 2,874,741 beschrieben. Dieser Drahtgewindeeinsatz weist einen Bereich zwischen den Enden auf, der schmaler ist ist als der übrige Einsatz, damit dieser Bereich eine Haftung auf eine Schraube ausüben kann.

Ein weiteres gewindepanzerndes Element ist in der US 3,459,248 beschrieben. Hier weist der Drahtgewindeeinsatz einen Zapfen auf, der sich senkrecht zur Achse erstreckt. Zudem ist eine Mehrzahl an Sehnen vorhanden. Ein Verfahren und Mittel zum Herstellen von gewindepanzernden Elementen mit verengten wendelförmigen Windungen ist in GB 857,058 beschrieben. Ein weiteres gewindepanzerndes Element ist zudem in JP 2000130424 beschrieben.

Im Rahmen der AU 426327 B2 werden Verbesserungen eines Ankers für Mauerwerk beschrieben. Der Anker weist hierbei eine Ausbuchtung in Form eines Knicks auf, um die Drehung des Ankers im Mauerwerk zu hemmen.

Es ist die Aufgabe vorliegender Erfindung, ein gewindepanzerndes Element bereitzustellen, das im Vergleich zum Stand der Technik Aufgrund seiner Ausgestaltung die Installation in einem Bauteil unterstützt und vereinfacht. In gleicher Weise soll ein entsprechendes Installationsverfahren für derart gestaltete gewindepanzernde Elemente bereitgestellt werden.

### 3. Zusammenfassung der Erfindung

Die obige Aufgabe wird durch ein gewindepanzerndes Element gemäß den Ansprüchen 1 bis 4, eine Schraube mit gewindepanzerndem Element gemäß Anspruch 10, ein Installationsverfahren für das gewindepanzernde Element gemäß Anspruch 11 sowie durch ein Bauteil mit gewindepanzerndem Element gemäß Anspruch 16, eine Wickelspindel gemäß Anspruch 18 und ein Herstellungsverfahren gemäß Anspruch 21 gelöst. Vorteilhafte Ausgestaltungen, bevorzugte Ausführungsformen und Weiterentwicklungen vorliegender Erfindung gehen aus der Beschreibung, den Ansprüchen und den anhängenden Zeichnungen hervor.

Ein gewindepanzerndes Element in Form eines Drahtgewindeeinsatzes weist die folgenden Merkmale auf: a) eine Mehrzahl von aufeinanderfolgenden wendeiförmigen Windungen, deren radiale Innenseite, vorzugsweise auch deren radialeAußenseite, in der Form an ein Gewinde angepasst ist, in der b) mindestens eine verengte wendelförmige Windung aus mindestens zwei wendelförmigen Windungsabschnitten besteht, die eine oder eine Mehrzahl aufeinanderfolgender Sekanten einschließen, die die verengte wendelförmige Windung radial einwärts verengt/verengen.

Das gewindepanzernde Element weist diese spezielle Form auf, um gemeinsam mit einer Schraube oder einer Einbauspindel auf vorteilhafte Weise in eine Öffnung eines Bauteils installiert zu werden. Sobald das gewindepanzernde Element auf der Schraube oder der Einbauspindel oder allgemein einem Einbauwerkzeug vormontiert worden ist, wird die verengte wendelförmige Windung, beispielsweise durch die Schraube, radial nach außen gedrückt. Dieses radiale nach außen Drücken der verengten wendelformigen Windung des gewindepanzernden Elements bewirkt, dass zumindest ein Teil der verengten wendelförmigen Windung radial nach außen über den Außendurchmesser des übrigen gewindepanzernden Elements hinaus ragt. Aufgrund dieses radial nach außen gerichteten Überstands wird während des Eindrehens der Schraube mit gewindepanzerndem Element in eine Öffnung eines Bauteils ein bestimmtes erhöhtes Drehmoment im Vergleich zum vorhergehenden Teil der Schraube mit gewindepanzerndem Element erforderlich sein. Erkennt man während der Installation der Schraube mit diesem gewindepanzernden Element den Anstieg des Drehmoments, kann man auf diese Weise überwachen, bis zu welcher Position das gewindepanzernde Element bereits in die Öffnung des Bauteils eingeschraubt oder eingedreht worden ist.

Um bei der Installation des gewindepanzernden Elements einen verlässlichen Anstieg des Einbau-Drehmoments zu erzielen, umfasst das gewindepanzernde Element beispielsweise mindestens eine verengte wendelförmige Windung mit mindestens drei wendelförmigen Windungsabschnitten, die an mindestens zwei Stellen eine oder eine Mehrzahl aufeinanderfolgender Sekanten einschließen. Es ist ebenfalls möglich, dass mindestens zwei verengte wendelförmige Windungen vorgesehen sind, die in Längsrichtung des gewindepanzernden Elements voneinander beabstandet angeordnet sind. Dieses spezielle Beispiel gewährleistet, dass zwei oder mehrere Anstiege bei der Erfassung des Einbau-Drehmoments der Schraube mit gewindepanzernden Element erkennbar sind, um unterschiedliche Einbaupositionen des gewindepanzernden Elements in der Öffnung des Bauteils für den Werker sichtbar zu machen.

Gemäß einem weiteren Beispiel ist eine der verengten wendelförmigen Windungen innerhalb der letzten ein bis vier wendelförmigen Windungen bezogen auf die Gangrichtung des gewindepanzernden Elements angeordnet. Gemäß einer weiteren Ausgestaltung ist eine verengte wendelförmige Windung im mittleren Bereich bezogen auf eine Länge des gewindepanzernden Elements angeordnet.

Erfindungsgemäß wird ein gewindepanzerndes Element vorgeschlagen, das auch bei Installation ohne Schraube oder Einbauspindel die gleiche Funktion wie das oben beschriebene gewindepanzernde Element gewährleistet. Dieses gewindepanzernde Element in Form eines Drahtgewindeeinsatzes weist die folgenden Merkmale auf: eine Mehrzahl von aufeinanderfolgenden wendelförmigen Windungen, deren radiale Innenseite, vorzugsweise auch deren radiale Außenseite in der Form an ein Gewinde angepasst ist, in der b) mindestens eine aufgeweitete wendelförmige Windung aus mindestens zwei wendelförmigen Windungsabschnitten besteht, die eine oder eine Mehrzahl aufeinanderfolgender Ausbuchtungen einschließen, die die aufgeweitete wendelförmige Windung radial auswärts aufweitet/aufweiten.

Im Vergleich zum oben beschriebenen gewindepanzernden Element mit verengter wendelförmiger Windung werden die verengten wendeliförmigen Windungen durch aufgeweitete wendelförmige Windungen ersetzt. Diese aufgeweiteten wendelförmigen Windungen nutzen anstelle von Sekanten eine oder eine Mehrzahl von radial nach außen gerichteten Ausbuchtungen, die über den Außendurchmesser des übrigen gewindepanzernden Elements hinaus ragen. Auf diese Weise erzeugen bereits diese aufgeweiteten wendelförmigen Windungen eine Steigerung des Einbau-Drehmoments, sobald sie in die Öffnung des Bauteils eingeschraubt werden. Daraus folgt, dass ein Anstieg des Einbau-Drehmoments des gewindepanzernden Elements auch ohne eine vorinstallierte Schraube oder Einbauspindel generierbar ist.

In einer ersten Ausgestaltung dieses gewindepanzernden Elements mit aufgeweiteter wendelförmiger Windung umfasst die mindestens eine aufgeweitete wendelförmige Windung mindestens drei wendelförmige Windungsabschnitte, die an mindestens zwei Stellen eine oder eine Mehrzahl aufeinanderfolgender Ausbuchtungen einschließen. Alternativ oder zusätzlich sind mindestens zwei aufgeweitete wendelförmige Windungen in dem gewindepanzernden Element vorgesehen, die in Längsrichtung des gewindepanzernden Elements voneinander beabstandet angeordnet sind. In weiterer bevorzugter Ausgestaltung dazu ist eine der aufgeweiteten wendelförmigen Windungen innerhalb der letzten ein bis vier wendelförmigen Windungen bezogen auf die Gangrichtung des gewindepanzernden Elements angeordnet. Weiterhin alternativ oder zusätzlich ist eine weitere aufgeweitete wendelförmige Windung im mittleren Bereich bezogen auf eine Länge des gewindepanzernden Elements angeordnet.

Des Weiteren offenbart vorliegende Erfindung ein Installationsverfahren für eine Schraube mit gewindepanzerndem Element oder eine Einbauspindel mit gewindepanzerndem Element oder ein Einbauwerkzeug mit einem gewindepanzernden Element in einer Öffnung mit Innengewinde eines Bauteils, wobei eine Ganghöhe pro Umdrehung des Innengewindes bekannt ist. Dieses Installationsverfahren weist die folgenden Schritte auf: a) Einschrauben der Schraube mit gewindepanzerndem Element, der Einbauspindel mit gewindepanzerndem Element oder des Einbauwerkzeugs mit gewindepanzerndem Element in das Innengewinde der Öffnung des Bauteils, b) Erfassen eines Einschraub-Drehmoments und eines Drehwinkels des gewindepanzernden Elements während des Einschraubens, c) Bestimmen einer Position des gewindepanzernden Elements in der Öffnung aus einem ersten zurückgelegten Drehwinkel nach einem ersten Anstieg des Einschraub-Drehmoments von einem Grund-Einschraub-Drehmoment auf ein erstes Einschraub-Drehmoment, das ein Einlaufen der verengten wendelförmigen Windung des gewindepanzernden Elements oder der aufgeweiteten wendelförmigen Windung des gewindepanzernden Elements in die Öffnung signalisiert, und der Ganghöhe des Gewindes.

Das erfindungsgemäße Installationsverfahren basiert darauf, dass beim Installieren des gewindepanzernden Elements sowohl der Drehwinkel wie auch das Einschraub-Drehmoment erfasst werden. Mit Hilfe der Erfassung des Einschraub-Drehmoments ist feststellbar, wann die auf der Schraube oder der Einbauspindel sitzende verengte wendelförmige Windung oder wann die aufgeweitete wendelförmige Windung in die Öffnung des Bauteils eingedreht wird, weil dabei ein Anstieg des Einschraub-Drehmoments stattfindet. Da aufgrund der Formgebung des gewindepanzernden Elements die Zunahme des Einschraub-Drehmoments definiert einstellbar ist, ist während des Installationsverfahrens mit Sicherheit erkennbar, wann dieser spezielle Bereich des gewindepanzernden Elements in die Öffnung des Bauteils eintritt. Erfasst man nun ab diesem Anstieg des Einschraub-Drehmoments den zurückgelegten Drehwinkel des gewindepanzernden Elements, weiß man, wie weit das gewindepanzernde Element bereits in der Öffnung des Bauteils installiert ist. Die Position des gewindepanzernden Elements ergibt sich dabei aus dem Produkt des Drehwinkels und der Ganghöhe des Innengewindes der Öffnung des Bauteils.

Zur weiteren Ausgestaltung des Installationsverfahrens ist es bevorzugt, ein maximales Drehmoment zu definieren und das Einschrauben des gewindepanzernden Elements bei Erreichen des maximalen Drehmoments zu beenden. In diesem Zusammenhang dient das maximale Drehmoment bzw. eine entsprechend zu definierende Drehmoment-Schwelle dazu, beispielsweise eine Anlage des gewindepanzernden Elements an einem Boden der Öffnung des Bauteils zu erfassen. In gleicher Weise ist auf diese Art erkennbar, dass der Kopf der Schraube mit gewindepanzerndem Element auf dem Bauteil aufliegt bzw. aufläuft.

Sollte das gewindepanzernde Element mit Schraube mehrere verengte wendelförmige Windungen aufweisen oder das gewindepanzernde Element mehrere aufgeweitete wendelförmige Windungen aufweisen, ist es bevorzugt, einen zweiten Anstieg des Einschraub-Drehmoments zu erfassen, welcher ein Einlaufen einer weiteren verengten oder aufgeweiteten wendelförmigen Windung des gewindepanzernden Elements in die Öffnung des Bauteils signalisiert, um auf dieser Grundlage die Position des gewindepanzernden Elements in der Öffnung des Bauteils zu bestimmen.

Des Weiteren umfasst vorliegende Erfindung ein Bauteil mit einer Öffnung mit Innengewinde und einem darin installierten gewindepanzernden Element oder einem gewindepanzernden Element mit Schraube. Um die Installation des gewindepanzernden Elements in der Öffnung des Bauteils zu unterstützen, ist bevorzugt am Eingang der Öffnung eine zylindrische Einführfläche ohne Innengewinde vorgesehen. Diese zylindrische Einführfläche erleichtert das Ansetzen und Ausrichten des gewindepanzernden Elements in Bezug auf die Öffnung, um das nachfolgende Einschrauben zu erleichtern.

Die vorliegende Erfindung umfasst zudem eine Wickelspindel zum Herstellen eines gewindepanzernden Elements aus einem Draht. Die Wickelspindel weist die folgenden Merkmale auf: einen Befestigungskopf, über den die Wickelspindel befestigbar ist, und einen Gewindeabschnitt, der mindestens eine Vertiefung in Form einer Sekante oder eine Erhöhung in Form einer Ausbuchtung aufweist. Der Gewindeabschnitt der Wickelspindel umfasst eine Mehrzahl von Gewindegängen. Bevorzugt sind innerhalb eines Gewindegangs des Gewindeabschnitts eine Vertiefung oder eine Erhöhung oder eine Mehrzahl aneinandergrenzender Vertiefungen oder Erhöhungen angeordnet. Es ist weiter bevorzugt, mehrere einzelne Vertiefungen oder Erhöhungen oder mehrmals eine Mehrzahl von Vertiefungen oder Erhöhungen in axialer Richtung entlang des Gewindeabschnitts verteilt anzuordnen. Gemäß einer anderen Ausführungsform ist die mindestens eine Vertiefung oder Erhöhung oder Mehrzahl von Vertiefungen oder Erhöhungen durch zwei Spindelgewindeabschnitte eingeschlossen.

Die vorliegende Erfindung offenbart zudem ein Herstellungsverfahren für ein gewindepanzerndes Element, insbesondere ein gewindepanzerndes Element, wie es oben beschrieben worden ist, das die folgenden Schritte aufweist: Ansetzen eines zu wickelnden Drahts an einer Wickelspindel mit mindestens einer Vertiefung oder Erhöhung in einem Gewindeabschnitt, erfindungsgemäß eine Wickelspindel gemäß obiger Beschreibung, Drehen der Wickelspindel derart, dass der zu wickelnde Draht auf die Wickelspindel aufgewickelt wird und die mindestens eine Vertiefung oder Erhöhung im Gewindeabschnitt mindestens eine Sekante oder Ausbuchtung ausformt, und Abtrennen des zu wickelnden Drahts von dem auf die Wickelspindel gewickelten Draht, so dass ein gewindepanzerndes Element vorliegt, und Abspindeln des gewindepanzernden Elements von der Wickelspindel.

### 4. Kurze Beschreibung der begleitenden Zeichnungen

Bevorzugte Ausführungsformen vorliegender Erfindung werden unter Bezugnahme auf die begleitende Zeichnung näher erläutert. Es zeigen:
- Fig. 1: ein Beispiel des gewindepanzernden Elements mit einer verengten wendelförmigen Windung,
- Fig. 2A: eine Schnittansicht entlang der Linie aus Fig. 1,
- Fig. 2B: eine Schnittansicht entlang der Linie aus Fig. 1 eines weiteren Beispiels des gewindepanzernden Elements mit mehreren in axialer Richtung verteilt angeordneten einzelnen verengten wendelförmigen Windungen,
- Fig. 2C: eine Schnittansicht entlang der Linie aus Fig. 1 eines weiteren Beispiels des gewindepanzernden Elements mit einer Mehrzahl aneinander angrenzender verengter wendelförmiger Windungen,
- Fig. 3: eine bevorzugte Ausführungsform des gewindepanzernden Elements mit zwei voneinander beabstandeten aufgeweiteten wendelförmigen Windungen,
- Fig. 4: eine Schnittdarstellung entlang der Linie aus Fig. 3,
- Fig. 5: eine Schraube mit vormontiertem gewindepanzerndem Element gemäß Fig. 1,
- Fig. 6: eine bevorzugte Ausführungsform einer Schraube mit gewindepanzerndem Element, das an seinem Schraubenkopf abgewandten Ende eine Mehrzahl von in ihrem Durchmesser verengten Windungen aufweist,
- Fig. 7: unterschiedliche Installationsstufen eines gewindepanzernden Elements in einer Öffnung eines Bauteils,
- Fig. 8: ein bevorzugtes Bauteil mit Öffnungen mit Innengewinde und Einführfläche,
- Zig. 9: eine bevorzugtes Ende eines gewindepanzernden Elements mit Mitnahme-Kerbe,
- Fig. 10: ein bevorzugtes Ende eines gewindepanzernden Elements mit Mitnahme-Zapfen,
- Fig. 11: beispielhafte Darstellung eines Einschraub-Drehmoments in Abhängigkeit vom Drehwinkel des gewindepanzernden Elements während seiner Installation in der Öffnung des Bauteils,
- Fig. 12: Flussdiagramm des bevorzugten Installationsverfahrens vorliegender Erfindung,
- Fig. 13: eine bevorzugte Ausführungsform einer Wickelspindel zur Herstellung des gewindepanzernden Elements und
- Fig. 14: Flussdiagramm des bevorzugten Herstellungsverfahrens des gewindepanzernden Elements.

### 5. Detaillierte Beschreibung bevorzugter Ausführungsformen vortiegender Erfindung

Das gewindepanzernde Element 1; 1' hat die Form einer Drahtwendel, die als Schraubenfeder ausgeführt ist. Die Drahtwendel besteht aus einer Mehrzahl von aufeinanderfolgenden wendelförmigen Windungen 5. Die wendelförmige Windungen 5 und somit das gesamte gewindepanzernde Element 1; 1' besitzt einen Innendurchmesser und einen Außendurchmesser D_{A}. Zudem hat das gewindepanzernde Element 1; 1' je nach Anwendungsfall eine bestimmte Länge L.

Die wendelförmigen Windungen 5 haben vorzugsweise einen diamantförmigen Querschnitt. Dadurch wird an der radialen Innen- und Außenseite der wendeiförmigen Windungen 5 jeweils eine an ein Gewinde angepasste Form vorgegeben. Es ist ebenfalls bevorzugt, dass lediglich die radiale Innenseite des gewindepanzernden Elements 1; 1' eine Gewindeform vorgibt. Die radiale Außenseite des gewindepanzernden Elements 1; 1' ist in diesem Fall beliebig ausgebildet und realisiert beispielsweise eine Verankerungs- oder Materialverdrängungsfunktion im Material eines Bauteils B.

Die Drahtwendel besteht bevorzugt aus einem Federstahl oder einem anderen elastischen Werkstoff hoher Festigkeit.

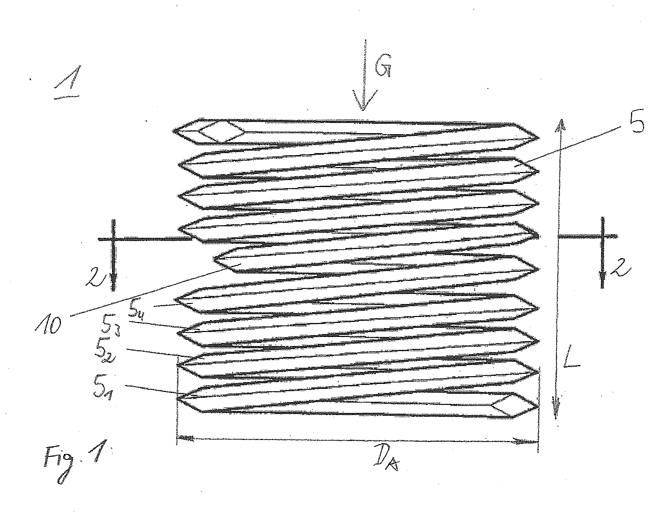

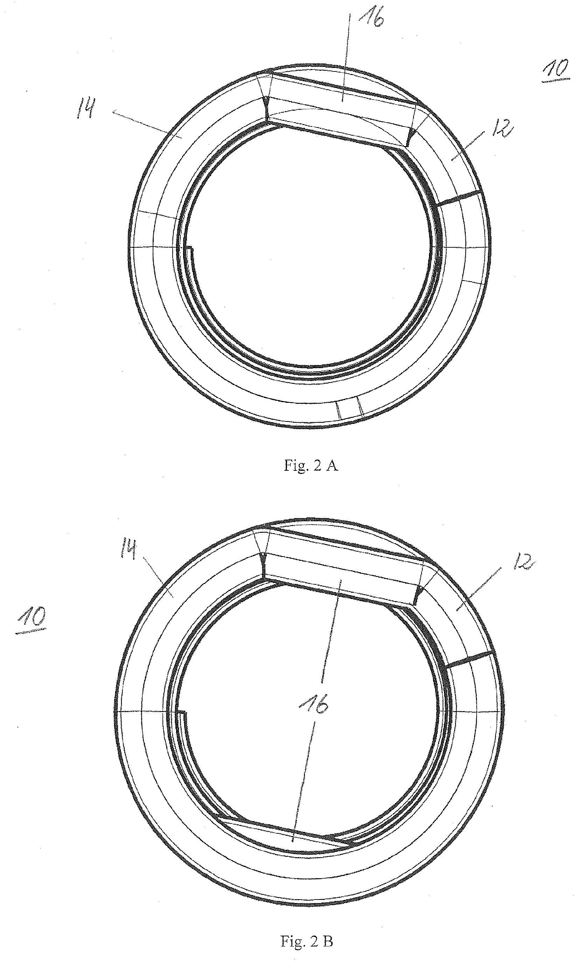

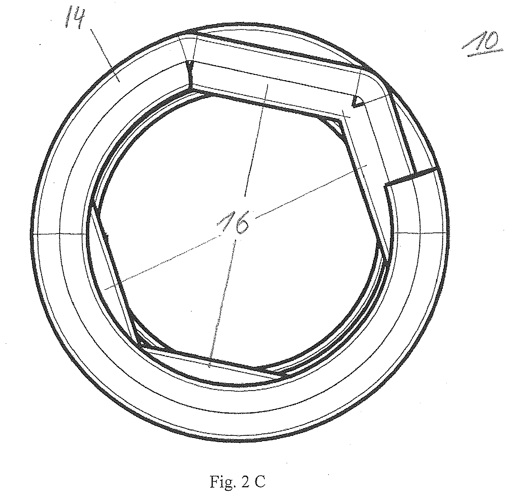

Das gewindepanzernde Element 1; 1' vorliegender Erfindung erfordert aufgrund seiner speziellen Ausgestaltung während seines Einschraubens bzw. Einbaus in eine Öffnung 50 des Bauteils B nach einem Grund-Einschraub-Drehmoment M₀ mindestens ein erstes Einschraub-Drehmoment M₁. Da während des Einbaus des gewindepanzernden Elements 1; 1' auch sein Drehwinkel erfasst wird, ist aus dem Drehmoment-Verlauf und dem Drehwinkel die Position des gewindepartzernden Elements 1, 1' in der Öffnung 50 des Bauteils B bestimmbar. Dies ermöglicht eine verlässliche Prozessüberwachung und Qualitätssicherheit während der Installation bereits durch den Einsatz eines Standard-Schraubgeräts mit Drehmoment- und Drehwinkel-Erfassung und -Auswertung. Zu diesem Zweck weist das gewindepanzernde Element 1 gemäß Fig. 1 mindestens eine verengte wendelförmige Windung 10 auf. Fig. 2 zeigt eine Draufsicht auf die verengte wendelförmige Windung 10 aus Fig. 1.

Die verengte wendelförmigen Windung 10 umfasst mindestens zwei wendelförmige Windungsabschnitte 12, 14. Die Windungsabschnitte 12, 14 schließen eine Sekante 16 ein, die die sonst kreisförmige wendelförmige Windung 10 radial einwärts verengt (siehe Fig. 2A). Es ist ebenfalls bevorzugt, anstelle nur einer Sekante 16 eine Mehrzahl von Sekanten 16 zwischen den Windungsabschnitten 12, 14 aneinanderzureihen, wie es in Fig. 2C dargestellt ist. Gemäß einer weiteren Ausführungsform sind beispielsweise zwei oder mehrere einzelne (siehe Fig. 2B) oder zweimal oder mehrmals eine Mehrzahl von Sekanten 16 (nicht gezeigt) durch wendelformige Windungsabschnitte 12, 14 voneinander beabstandet. Es ist auch bevorzugt, mehr als zwei getrennte Sekanten 16 oder Sekantengruppen in der verengten wendelförmigen Windung 10 anzuordnen.

Fig. 1 zeigt das gewindepanzernde Element 1 mit einer bestimmten Länge L. Vorzugsweise ist mindestens eine verengte wendelförmige Windung 10 im mittleren Bereich bezogen auf die Länge L des gewindepanzernden Elements 1 angeordnet. Ergänzend dazu ist es vorteilhaft, mindestens eine weitere verengte wendelförmige Windung 10 in einem Abstand zum mittleren Bereich des gewindepanzernden Elements 1 anzuordnen. Gemäß einer bevorzugten Ausführungsform wird eine der verengten wendelförmigen Windungen 10 innerhalb der letzten ein bis vier wendelförmigen Windungen 5 bezogen auf die Gangrichtung G des gewindepanzernden Elements 1 angeordnet. Der Vorteil dieser Konstruktion wird später im Zusammenhang mit dem Installationsverfahren des gewindepanzernden Elements 1 erläutert.

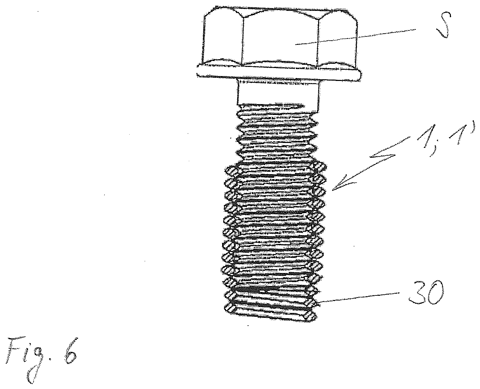

Gemäß einer weiteren optionalen Ausgestaltung weist das gewindepanzernde Element 1 eine Mehrzahl von aufeinanderfolgenden wendelförmigen Windungen 30 auf, wie sie beispielsweise in Fig. 6 dargestellt sind. Diese Mehrzahl an wendelförmigen Windungen 30 umfasst vorzugsweise zwei bis fünf Windungen 30. Diese sind am Anfang des gewindepanzernden Elements 1 gesehen in dessen Gangrichtung G angeordnet. Die wendelförmigen Windungen 30 weisen einen geringeren Durchmesser als den Außendurchmesser D_{A} des gewindepanzernden Elements 1 auf. Auf diese Weise sind die Windungen 30 dazu in der Lage, einen größeren Kraftschluss beispielsweise zu einer Schraube S, einer Einbauspindel 60 oder einem anderen Einbauwerkzeug herzustellen als die übrigen wendelförmigen Windungen 5 des gewindepanzernden Elements 1 mit dem Außendurchmesser D_{A}. Durch diesen gesteigerten Kraftschluss wird beispielsweise die Installation des gewindepanzernden Elements 1 im Bauteil B unterstützt, da das gewindepanzernde Element 1 besser auf der Schraube S, der Einbauspindel 60 oder einem anderen Einbauwerkzeug gehalten wird. Während bereits eine einzelne dieser Windungen 30 das gewindepanzernde Element 1 ausreichend auf bspw. der Schraube S befestigen würde, wird durch mindestens eine zusätzliche Windung 30 der Halt des gewindepanzernden Elements 1 auf der Schraube S zusätzlich unterstützt. Der Hintergrund besteht darin, dass bspw. beim Einschrauben der Schraube S mit gewindepanzerndem Element 1 in eine Öffnung 50 des Bauteils B die erste Windung 30 auf einen Widerstand treffen könnte. Ein derartiger Widerstand ist bspw. ein Grat oder eine Verschmutzung im Innengewinde 52 der Öffnung 50. Durch diesen Widerstand wird die erste Windung 30 beim Einschrauben in die Öffnung 50 blockiert und teilweise aufgeweitet. Dadurch sinkt der Kraftschluss zwischen der Schraube S und der ersten Windung 30. Da aber noch mindestens eine weitere Windung 30 in dem gewindepanzernden Element 1 vorgesehen ist, sichert diese einen verlässlichen Halt des gewindepanzernden Elements 1 auf der Schraube S. Bevorzugt ist die mindestens eine weitere Windung 30 direkt angrenzend an die erste Windung 30 angeordnet. Es ist ebenfalls bevorzugt, die mindestens eine weitere Windung 30 mit mehreren Windungen Abstand zur ersten Windung 30 anzuordnen (nicht gezeigt). In gleicher Weise ist es bevorzugt, aufeinander folgende beabstandete Gruppen von Windungen 30 vorzusehen. Während eine oder mehrere Gruppen genutzt werden können, enthalten diese jeweils eine bis fünf Windungen 30. Mit dieser Anordnung der Windungen 30 wird gewährleistet, dass durch die kraftschlüssige Verbindung zwischen Schraube S und gewindepanzerndem Element 1 die Reibung zwischen Innengewinde 52 und gewindepanzerndem Element 1 das Einschraubmoment der Schraube S bestimmt. Durch einen Widerstand im Innengewinde 52 kann daher das gewindepanzernde Element 1 nicht derart gelockert und/oder blockiert werden, dass nur noch die Reibung zwischen Schraube S und gewindepanzerndem Element 1 das messbare Einschraub-drehmoment bestimmt (siehe unten). Dies gewährleistet eine verlässliche Installation des gewindepanzernden Elements 1 im Bauteil B.

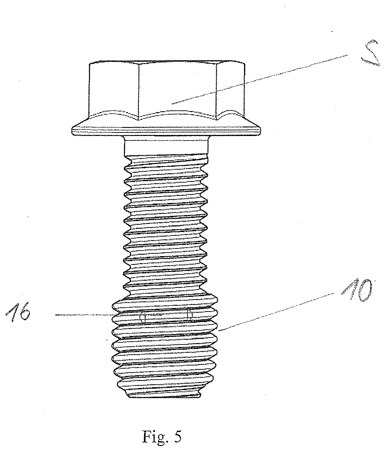

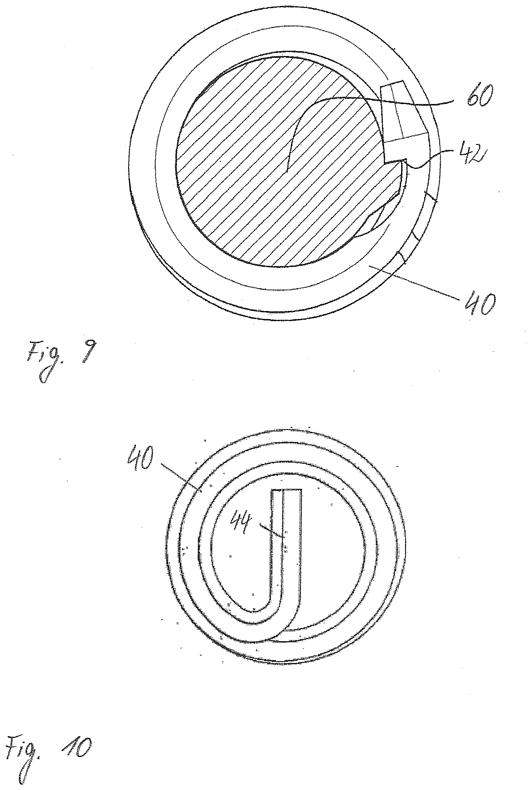

Das gewindepanzernde Element 1 gemäß Fig. 1 wird mit Hilfe einer Schraube S (vgl. Figuren 5 und 6), einer Einbauspindel 60 (vgl. Fig. 9) oder einem ähnlichen Einbauwerkzeug in der Öffnung 50 des Bauteils B installiert. Nach dem Aufschrauben des gewindepanzernden Elements 1 auf die Schraube S wird die verengte wendelförmige Windung 10 durch die Schraube S radial nach außen gedrückt. In diesem Zustand erstreckt sich die verengte wendelförmige Windung 10 über den Außendurchmesser D_{A} des gewindepanzernden Elements 1 hinaus. Dieser radial auswärts gerichtete Überstand ist abhängig von der Anzahl und Dimensionierung der Sekante 16. In Abhängigkeit von der Dimensionierung des Überstands ist gezielt der Anstieg eines Einschraub-Drehmoments M beim Einlaufen der verengten wendelförmigen Windung 10 in das Innengewinde 52 des Bauteils B einstellbar.

Wird nun die Schraube S mit gewindepanzerndem Element 1 in Gangrichtung G in die Öffnung 50 des Bauteils B eingeschraubt, erfordern die ersten wendelförmigen Windungen 5₁ bis 5₄ ein Grund-Einschraub-Drehmoment M₀. Das Einschraub-Drehmoment M steigt auf ein erstes Einschraub-Drehmoment M₁, sobald die verengte wendelförmige Windung 10 mit radial auswärts gerichtetem Überstand in das Innengewinde 52 der Öffnung 50 einläuft. Entsprechend verändert sich das Einschraub-Drehmoment M weiter in definierter Weise, wenn weitere verengte wendelförmige Windungen 10 mit radial auswärts gerichtetem Überstand in das Innengewinde 52 der Öffnung 50 einlaufen.

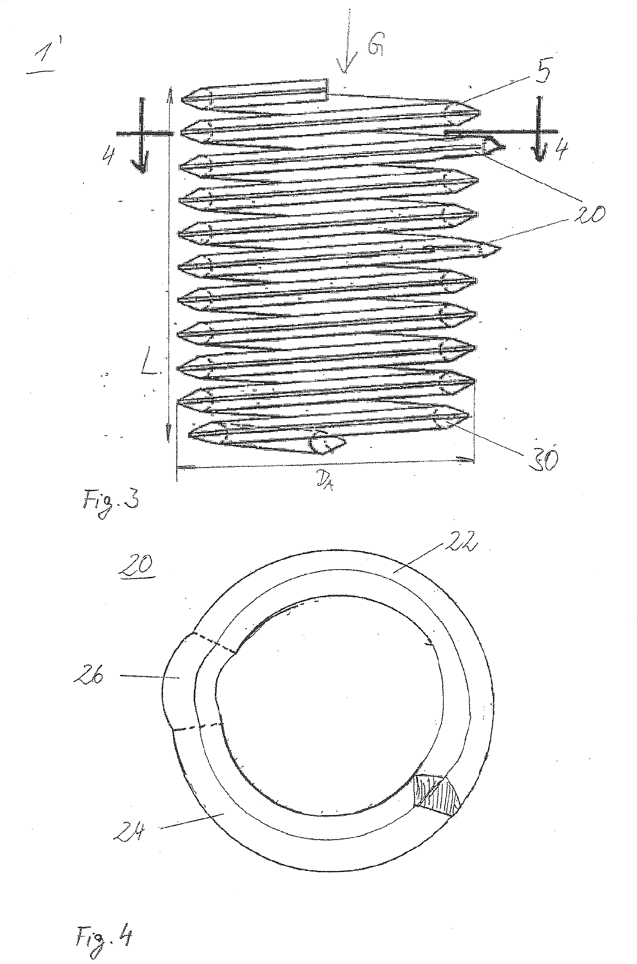

Eine erfindungsgemäße Ausgestaltung eines gewindepanzernden Elements 1' zeigt Fig. 3. Dieses gewindepanzernde Element 1' muss nicht mit einer Schraube S oder einer Einbauspindel 60 im Bauteil B installiert werden. Trotzdem liefert es aufgrund seiner Ausgestaltung während der Installation die gleiche Veränderung des Einschraub-Drehmoments wie das gewindepanzernde Element 1 (s. o.).

Die gewindepanzernden Elemente 1 und 1' der Fig. 1 und 3 unterscheiden sich nur darin, dass das gewindepanzernde Element 1' eine aufgeweitete wendelförmige Windung 20 anstelle der verengten wendelförmigen Windung 10 nutzt. Während die wendelförmigen Windungsabschnitte 22, 24 in Form, Anordnung und Anzahl den verschiedenen Ausführungsformen der wendelförmigen Windungsabschnitte 12, 22 entsprechen, wurde die mindestens eine Sekante 16 durch mindestens eine Ausbuchtung 26 ausgetauscht. Die Ausbuchtung 26 erstreckt sich radial auswärts über den Außendurchmesser D_{A} des gewindepanzernden Elements 1' hinaus. Dieser radial auswärts gerichtete Überstand wird entweder durch eine oder eine Mehrzahl kombinierter Ausbuchtungen 26 oder durch mehrere getrennte Ausbuchtungen 26 oder Gruppen von Ausbuchtungen 26 erzeugt. Wie bereits oben erwähnt worden ist, werden die Ausbuchtungen 26 und die aufgeweiteten wendelförmigen Windungen 20 auf die gleiche Art angeordnet wie die Sekanten 16 und die verengten wendelförmigen Windungen 10 (vgl. Fig. 2A, 2B, 2C), auch wenn dies nicht gezeigt ist. In gleicher Weise umfasst das gewindepanzernde Element 1' bevorzugt auch die im Vergleich zum Außendurchmesser D_{A} verjüngten Windungen 30. Diese dienen wiederum der unterstützenden Befestigung des gewindepanzernden Elements 1' an einem Einbauwerkzeug durch einen gesteigerten Kraftschluss im Vergleich zum Stand der Technik.

Wird das gewindepanzernde Element 1' in das Innengewinde 52 der Öffnung 50 des Bauteils B eingeschraubt, erzeugt die mindestens eine aufgeweitete wendelförmige Windung 20 den gleichen Effekt wie die verengte wendelförmige Windung 10 nach Vorinstallation auf der Schraube S. Daher wird für weitere Details auf die obigen Ausführungen zum gewindepanzernden Element 1 verwiesen.

Zur Unterstützung der Installation der gewindepanzernden Elemente 1; 1' weisen sie bevorzugt jeweils in der in Gangrichtung G gesehenen ersten Windung 40 eine Mitnahme-Kerbe 42 oder einen Mitnahme-Zapfen 44 auf, wie sie in den Figuren 9 und 10 gezeigt sind.

Die gewindepanzernden Elemente 1; 1' werden in der Öffnung 50 des Bauteils B installiert. Die Öffnung 50 umfasst das Innengewinde 52, das durch das gewindepanzernde Element 1; 1' verstärkt werden soll. Die Öffnung 50 weist an ihrem Eingang vorzugsweise eine zylindrische Einführfläche 54 ohne Innengewinde 52 auf. Mit Hilfe der Einführfläche 54 kann das gewindepanzernde Element 1, 1' zunächst in Bezug auf die Öffnung 50 ausgerichtet werden. Zudem unterstützt die Einführfläche 54 das Einlaufen des gewindepanzernden Elements 1; 1', weil ein anfängliches Verkanten des gewindepanzernden Elements 1; 1' in der Öffnung 50 vermieden wird.

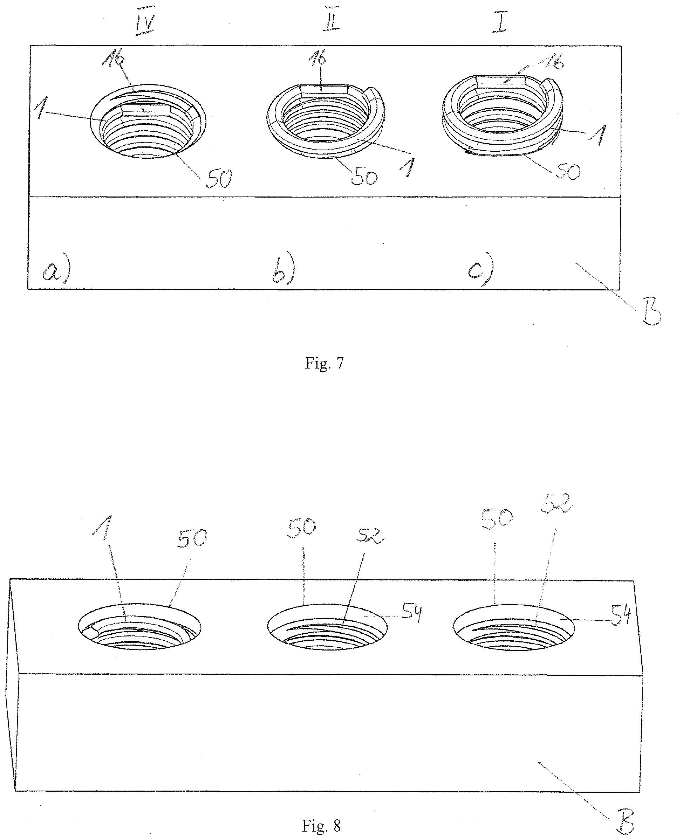

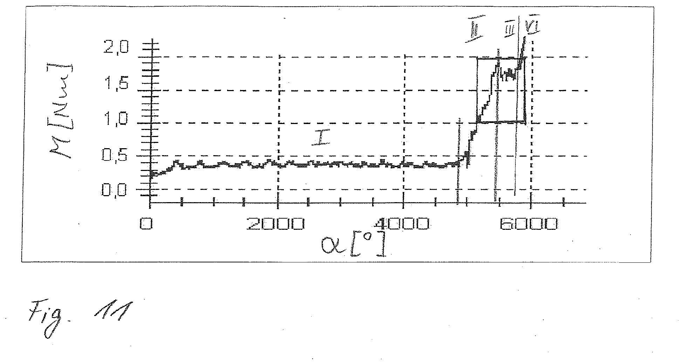

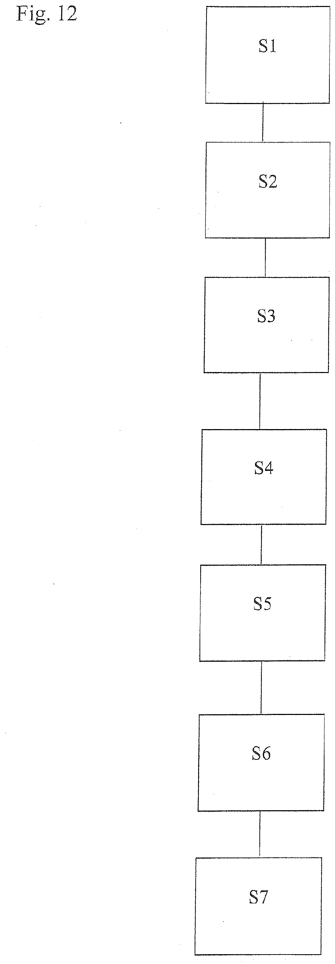

Anhand von Fig. 7, dem Einschraub-Drehmoment-Drehwinkel-Diagramm in Fig. 11 und dem Flussdiagramm in Fig. 12 wird das Installationsverfahren des gewindepanzernden Elements 1; 1' im Bauteil B beschrieben. Beispielgebend für die beiden gewindepanzernden Elemente 1; 1' wird das gewindepanzernde Element 1 im Bauteil B mit der Schraube S installiert. In gleicher Weise könnte man die gewindepanzernden Elemente 1; 1' mit einer Einbauspindel 60 oder einem bekannten Einbauwerkzeug im Innengewinde 52 der Öffnung 50 einbauen.

In den Figuren 7a, 7b, 7c sind unterschiedliche Stadien der Installation dargestellt. Für eine bessere Veranschaulichung ist jeweils die Schraube S nicht gezeigt, mit der das gewindepanzernde Element 1 installiert wird. Dadurch, dass die Schraube S nicht gezeigt ist, ist die Position der Sekante 16 der verengten wendelförmigen Windung 10 in Bezug auf das Innengewinde 52 zu erkennen.

In Fig. 7c ist ein Teil des gewindepanzernden Elements 1 aber noch nicht die Sekante 16 in das Innengewinde 52 eingelaufen. In Fig. 7b wurde die Sekante 16 gerade vom Innengewinde 52 aufgenommen und in Fig. 7a ist das gewindepanzernde Element 1 vollständig in der Öffnung 50 des Bauteils B installiert.

Im Schritt S1 des Installationsverfahrens wird zunächst das gewindepanzernde Element 1 in das Innengewinde 52 eingeschraubt, ohne dass bereits eine verengte wendelförmige Windung 10 eingeschraubt wird. Aufgrund der Reibung zwischen Innengewinde 52 und dem gewindepanzernden Element 1 ist ein Grund-Einschraub-Drehmoment M₀ erforderlich, um dieses Einschrauben gemäß Fig. 7c zu realisieren. Diese erste Phase I ist in Fig. 11 gekennzeichnet. Sie erfordert ein beispielhaftes Grund-Einschraub-Drehmoment M₀ von 0,4 Nm über einen Drehwinkel a von 4.800°.

Wie man anhand des Diagramms in Fig. 11 erkennen kann, wird während des Einschraubvorgangs bzw. des Installationsverfahrens sowohl das Einschraub-Drehmoment M wie auch der Drehwinkel a online erfasst und ausgewertet. Dies ist beispielsweise mit Standard-Elektroschraubern umsetzbar. Derartige Elektroschrauber ermöglichen über eine Verbindung zu einer Steuer- und Auswerteeinheit einen sofortigen Zugriff auf durch den Elektroschrauber realisierte Einschraub-Drehmomente und Drehwinkel.

In einer zweiten Phase II wird die Sekante 16 in das Innengewinde 52 eingeschraubt. Da die Sekante 16 auf der Schraube S eine radial auswärtige Vergrößerung der Windung 10 erzeugt, nimmt das Einschraub-Drehmoment M beim Einlaufen der Sekante 16 in das Innengewinde 52 zu. Sobald die Sekante 16 vollständig in das Innengewinde 52 eingelaufen ist, wird ein Plateau in der Einschraub-Drehmoment-Drehwinkel-Kurve erreicht. In dieser Phase II steigt somit das Einschraub-Drehmoment M von dem Grund-Einschraub-Drehmoment M₀ auf ein erstes Einschraub-Drehmoment M₁ auf Höhe des Plateaus der Einschraub-Drehmoment-Drehwinkel-Kurve. Dieser Zustand ist in Fig. 7b gezeigt.

Dieses erste Einschraub-Drehmoment M₁ wäre ebenfalls erfassbar, wenn eine aufgeweitete wendelförmige Windung 20 des gewindepanzernden Elements 1' in das Innengewinde 52 einlaufen würde.

Vom Innengewinde 52 des Bauteils B ist die Ganghöhe bekannt. Ganghöhe bezeichnet die Strecke, die eine Schraube bei einer vollständigen Umdrehung innerhalb des Innengewindes 52 versetzt werden würde. Multipliziert man den erfassten Drehwinkel a nach dessen Division durch 360° mit der Ganghöhe des Innengewindes 52, erhält man die Strecke, die das gewindepanzernde Element 1 in die Öffnung 50 hinein versetzt worden ist. Zudem ist bekannt, an welcher Position bezogen auf die Länge L des gewindepanzernden Elements 1 die Windung 10 mit Sekante 16 angeordnet ist. Das Erreichen des ersten Einschraub-Drehmoments M₁ bei einem bestimmten Drehwinkel a am Ende von Phase II liefert daher eine Überprüfungsmöglichkeit, ob das gewindepanzernde Element 1 richtig in das Innengewinde 52 eingelaufen ist und welche Position es erreicht hat. Am Ende von Phase II (vgl. Fig. 7b) muss das Produkt aus Ganghöhe des Innengewindes 52 und des Quotienten aus Drehwinkel a und 360° der Position der Windung 10 bezogen auf die Länge L des gewindepanzernden Elements 1 entsprechen.

Wird der Einschraub-Vorgang fortgesetzt und tritt zunächst keine weitere Windung 10 in das Innengewinde 52 ein, bleibt das Einschraub-Drehmoment M auf dem Plateauwert des ersten Einschraub-Drehmoments M₁. Würde eine weitere Windung 10 in das Innengewinde 52 einlaufen, würde ein weiterer Anstieg des Einschraub-Drehmoments M bis zu einem zweiten Einschraub-Drehmoment M₂ in Analogie zu Phase II erfasst werden (Schritt S4, nicht gezeigt). Auch dieser weitere Anstieg des Einschraub-Drehmoments M und der sich anschließende Plateauwert bei einem bestimmten Drehwinkel a kann wieder dazu genutzt werden, um die Position des gewindepanzernden Elements 1 in der Öffnung 50 zu bestimmen und zu überprüfen.

Ist das gewindepanzernde Element 1;1' vollständig installiert, läuft beispielsweise das gewindepanzernde Element 1;1' auf den Boden der Öffnung 50 auf oder der Kopf der Schraube S setzt auf der Oberfläche des Bauteils B auf. In diesem Moment steigt das Einschraub-Drehmoment M steil an (Phase IV) und übersteigt einen zuvor definierten maximalen Drehmoment-Schwellenwert. Bei Überschreiten des Drehmoment-Schwellenwerts wird der Installationsvorgang gemäß einer bevorzugten Ausführungsform automatisch beendet. Es ist weiterhin bevorzugt, an dieser Stelle anhand des Drehwinkels a nochmals die Position des gewindepanzernden Elements innerhalb der Öffnung 50 zu berechnen, um das Ende der Installation zu bestätigen.

Nach dem beschriebenen Installationsverfahren werden während des Einschraubens oder allgemein während der Installation des gewindepanzernden Elements 1; 1' in der Öffnung 50 des Bauteils B vorzugsweise kontinuierlich das Einschraub-Drehmoment M und der Drehwinkel a erfasst. Auf dieser Grundlage ist es bevorzugt, ein Prozessfenster P zu definieren, um dem Werker die Installation des gewindepanzernden Elements 1; 1' zu erleichtern. Das Prozessfenster P ist beispielgebend in Fig. 11 veranschaulicht.

Das Prozessfenster P wird mindestens durch einen minimalen Drehwinkel a_{P1} und ein minimales Einschraub-Drehmoment M_{P1} definiert. Es ist weiterhin bevorzugt, zusätzlich einen maximalen Drehwinkel a_{P2} und ein maximales Einschraub-Drehmoment M_{P2} zu definieren. Diese vier vom Werker vor der Installation des gewindepanzernden Elements 1; 1' festzulegenden Werte a_{P1}, M_{P1}, a_{P2} und M_{P2} spannen das in Fig. 11 gezeigte Prozessfenster P auf.

Erfasst während des Installationsverfahrens der verwendete Elektroschrauber oder eine daran angeschlossene Steuerung, dass die minimalen Grenzen a_{P1} und M_{P1} des Prozessfensters P überschritten worden sind, wird dies als Erreichen des Mindestinstallationsziels erfasst. Auf dieser Grundlage wird gemäß einer Ausführungsform das Installationsergebnis des gewindepanzernden Elements 1; 1' als "in Ordnung" eingestuft.

Es ist weiter bevorzugt, dass das Prozessfenster P derart dimensioniert und im Einschraub-Drehmoment-Drehwinkel-Raum angeordnet wird, dass innerhalb des Prozessfensters P das Einschraub-Drehmoment M den Plateauwert der Phase III erreicht. Dieser Plateauwert signalisiert das Einlaufen der letzten verengten wendelförmigen Windung 10 oder der letzten aufgeweiteten wendelförmigen Windung 20 gesehen in Gangrichtung G in das Innengewinde 52 der Öffnung 50 bei einem bestimmten Drehwinkel a, wie es oben ausführlich diskutiert worden ist. In diesem Zusammenhang wird vorzugsweise das Prozessfenster P derart dimensioniert, dass der Plateauwert bzw. die Phase III vollständig innerhalb des Prozessfensters P liegt. Wird somit innerhalb des Prozessfensters P das Erreichen des Plateauwerts des Einschraub-Drehmoments der Phase III erfasst, kann auf dieser Grundlage bevorzugt ebenfalls die Installation als "in Ordnung" eingestuft werden, weil die letzte Windung 10;20 vollständig in das Innengewinde 52 eingebunden ist. Wird dieser Plateauwert der Phase III nicht innerhalb des Prozessfensters P erreicht oder setzt sich dieser Plateauwert außerhalb des Prozessfensters P zu höheren Drehwinkel-Werten als der maximalen Drehwinkel-Grenze a_{P2} fort, wird die Installation bevorzugt als "nicht in Ordnung" eingestuft.

Gemäß einer weiteren bevorzugten Ausgestaltung des Installationsverfahrens soll vor Erreichen der maximalen Drehwinkel-Grenze a_{P2} - also innerhalb des Prozessfensters P - das Einschraub-Drehmoment M den definierten maximalen Schwellenwert (s. o.) überschreiten. Ist dies der Fall, wird der Installationsvorgang als "in Ordnung" eingestuft und automatisch beendet. Sollte dieser maximale Schwellenwert des Einschraub-Drehmoments nicht überschritten werden, hat das gewindepanzernde Element 1; 1' noch nicht seine Endposition erreicht und somit kann die Installation nicht als "in Ordnung" eingestuft werden. Sie wird vorzugsweise fortgesetzt oder abgebrochen oder dem Werker wird signalisiert, dass das Installationsverfahren das Prozessfenster P verlässt. In diesem Fall könnte sich eine Überwachung des weiteren Installationsverfahrens durch den Werker anstatt durch die automatische Steuerung anschließen.

Es ist ebenfalls bevorzugt, dass anstelle eines automatischen Endes des Installationsverfahrens durch die Steuerung dem Werker das Ende des Installationsvorgangs signalisiert wird, so dass dieser dann das Installationsverfahren beendet.

Wird der Plateauwert des Einschraub-Drehmoments der Phase III oder der maximale Schwellenwert des Einschraub-Drehmoments nicht innerhalb des Prozessfensters erreicht, wird die Installation als "nicht in Ordnung" eingestuft und automatisch abgebrochen oder ein Abbruch signalisiert.

Es versteht sich, dass die obigen Bedingungen einzeln oder in beliebiger Kombination verwendet werden können. Es ist ebenfalls bevorzugt, das in Fig. 11 gezeigte Prozessfenster P anders zu dimensionieren und im Einschraub-Drehmoment-Drehwinkel-Raum anders anzuordnen. So können beispielsweise die Grenzen des Prozessfensters P derart verschoben werden, dass neben den Phasen II, III, IV auch ein Teil der Phase I der Einschraub-Drehmoment-Drehwinkel-Kurve im Prozessfenster enthalten ist.

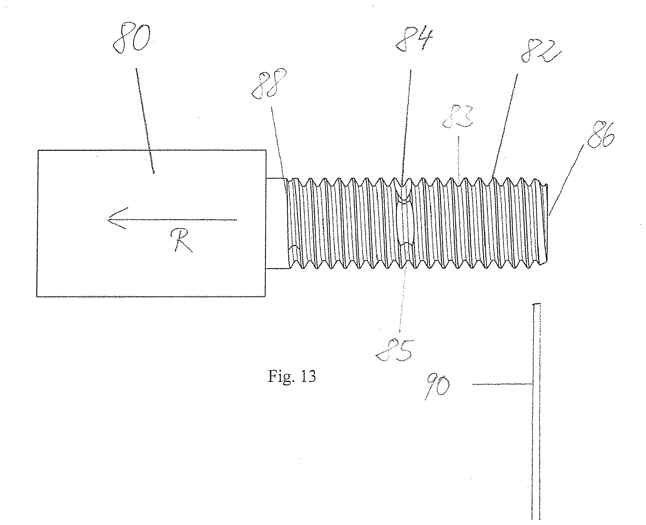

Die vorliegende Erfindung offenbart zudem eine Wickelspindel 80, wie sie gemäß einer bevorzugten Ausführungsform in Fig. 13 dargestellt ist. Die Wickelspindel 80 umfasst einen Befestigungskopf, über den die Wickelspindel 80 befestigbar ist. Dieser Befestigungskopf wird beispielsweise mit einem Motor oder einem Getriebeabschnitt derart verbunden, dass die Drehbewegung des Motors oder des Getriebeabschnitts auf die Wickelspindel übertragbar ist.

Des Weiteren umfasst die Wickelspindel 80 einen Gewindeabschnitt 82. Der Gewindeabschnitt 82 wird durch eine Mehrzahl von Spindelgewindegängen 83 gebildet. Gemäß einer bevorzugten Ausführungsform umfasst mindestens ein Spindelgewindegang 83 eine Vertiefung 84 in Form einer Sekante oder eine Erhöhung (nicht gezeigt) in Form einer Ausbuchtung, wie sie später in das gewindepanzernde Element 1; 1' eingeformt werden. In gleicher Weise ist es bevorzugt, dass der Gewindegang eine Mehrzahl von aneinander angrenzenden Vertiefungen 84 oder Ausbuchtungen (nicht gezeigt) umfasst. Es ist zudem bevorzugt, dass verteilt über die Länge des Gewindeabschnitts 82 mehrere Spindelgewindegänge 83 jeweils eine Vertiefung 84 oder Ausbuchtung oder eine Mehrzahl von Vertiefungen 84 oder Ausbuchtungen aufweist.

Die Wickelspindel 80 dient dazu, einen Draht 90 auf die Wickelspindel 80, im Speziellen den Gewindeabschnitt 82 aufzuwickeln, um ein gewindepanzerndes Element 1; 1' herzustellen. Wird daher der Draht 90 auf den Gewindeabschnitt 82 aufgewickelt, nimmt er einerseits die Form des Gewindeabschnitts 82 an, um eine Drahtwendel zu bilden. Des Weiteren wird der aufzuwickelnde Draht 90 komplementär zu der/den vorhandenen Vertiefungen 84 oder Ausbuchtungen (nicht gezeigt) geformt. Basierend auf der Anzahl und Anordnung der Vertiefungen 84 oder Ausbuchtungen (nicht gezeigt) werden gewindepanzernde Elemente 1, 1' entsprechend den Figuren 1 bis 4 und der obigen Beschreibung hergestellt. Auch wenn es hier nicht im Detail beschrieben oder dargestellt ist, kann somit der Gewindeabschnitt 82 bevorzugt komplementär zu den verschiedenen bevorzugten gewindepanzernden Elementen 1, 1' (siehe oben) geformt sein, um diese mit Hilfe der Wickelspindel 80 herstellen zu können.

Der Gewindeabschnitt 82 weist zudem eine Gangrichtung R auf, die durch den Pfeil in Fig. 13 angedeutet ist. Während des Wickelns des Drahts 90 auf die Wickelspindel 80 wird während des Drehens der Wickelspindel 80 entweder die Wickelspindel 80 entgegen der Gangrichtung R bewegt. Oder es wird während des Drehens der Spindel 80 der Draht 90 in seiner senkrechten Ausrichtung zur Längsachse der Wickelspindel 80 in Gangrichtung R bewegt. Es ist natürlich ebenfalls bevorzugt, während des Aufwickelns des Drahts 90 auf die Wickelspindel 80 gleichzeitig die Wickelspindel 80 entgegen der Gangrichtung R und den Draht 90 in Gangrichtung R zu bewegen.

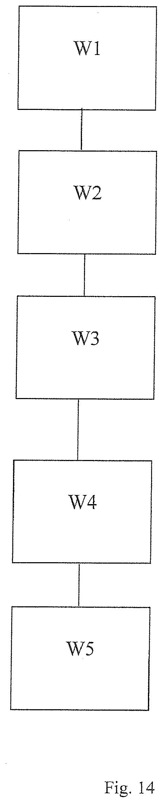

Des Weiteren offenbart vorliegende Erfindung ein Herstellungsverfahren für ein gewindepanzerndes Element 1; 1', wie es oben beschrieben worden ist. Dieses Herstellungsverfahren weist vorzugsweise die Schritte gemäß dem Flussdiagramm in Fig. 14 auf. Zur Herstellung des gewindepanzernden Elements 1; 1' wird vorzugsweise die bereits oben beschriebene Wickelspindel 80 gemäß Fig. 13 verwendet, auf die ein zu wickelnder Draht 90 aufgewickelt wird. Entsprechend der gewünschten Form des herzustellenden gewindepanzernden Elements 1; 1' wird zunächst eine passend geformte Wickelspindel 80 sowie ein entsprechender Draht 90 im Schritt W1 ausgewählt und bereitgestellt. Im Speziellen weist bevorzugt die Wickelspindel 80 eine unterschiedliche Anzahl und Verteilung von Vertiefungen 84 oder Ausbuchtungen auf. Zudem kann die Gewindeform des Gewindeabschnitts 82 variieren, die die spätere Form des gewindepanzernden Elements 1; 1' vorgibt.

Im nächsten Schritt W2 wird das Ende des zu wickelnden Drahts 90 (vgl. Fig. 13) an einem ersten Ende 86 des Gewindeabschnitts 82 der Wickelspindel 80 angesetzt. Es ist ebenfalls denkbar, das Ende des zu wickelnden Drahts 90 an dem Ende 88 des Gewindeabschnitts 82 anzusetzen, um ihn nachfolgend auf den Gewindeabschnitt 82 wickeln zu können. Nach dem Ansetzen in Schritt W2 wird der Draht 90 in den ersten Spindelgewindegang 83 nahe dem Ende 86 des Gewindeabschnitts 82 gedrückt. Diese Kraftwirkung gewährleistet, dass während des nachfolgenden Drehens der Wickelspindel 80 der Draht 90 in die Spindelgewindegänge 83 des Gewindeabschnitts 82 gezwängt wird. Auf diese Weise nimmt der aufgewickelte Draht 90 die Form des Gewindeabschnitts 82 an, die durch die einzelnen Spindelgewindegänge 83 mit oder ohne Vertiefungen 84 oder Ausbuchtungen (nicht gezeigt) vorgegeben werden.

Zum Wickeln des Drahts 90 auf den Gewindeabschnitt 82 ist der Draht 90 senkrecht zur Längsachse der Wickelspindel 80 ausgerichtet (vgl. Fig. 13). Während des Wickelns des Drahts 90 auf den Gewindeabschnitt 82 dreht sich die Wickelspindel 80 um ihre Längsachse. Gleichzeitig wird bevorzugt die Wickelspindel 80 entgegen ihrer Gangrichtung R bewegt, um den Draht 90 auf den Gewindeabschnitt 82 aufzuwickeln. In gleicher Weise ist es bevorzugt, den Draht 90 in Gangrichtung R zu bewegen, während der Draht 90 auf den Gewindeabschnitt 82 aufgewickelt wird. Gemäß einer weiteren bevorzugten Ausführungsform ist es bevorzugt, gleichzeitig die Wickelspindel 80 entgegen der Gangrichtung R zu bewegen, während der Draht 90 in Gangrichtung R bewegt wird.

Während des Aufwickelns des Drahts 90 auf den Gewindeabschnitt 82 wird die Form der einzelnen Spindelgewindegänge 83 in den Draht 90 eingeprägt. Dadurch wird durch die mindestens eine Vertiefung 84 eine Sekante 16 oder durch die Erhöhung (nicht gezeigt) die Ausbuchtung 26 in entsprechender Anzahl und Verteilung der Vertiefungen 84 und Erhöhungen auf dem Gewindeabschnitt 82 in der Drahtwendel des gewindepanzernden Elements 1; 1' erzeugt.

Nachdem der Draht 90 auf den Gewindeabschnitt 82 aufgewickelt worden ist, befindet sich die Drahtwendel, die später das gewindepanzernde Element 1; 1' bildet, auf dem Gewindeabschnitt 82. Nun wird im Schritt W4 der senkrecht zur Längsachse der Wickelspindel 80 abstehende Draht 90 abgetrennt, um das gewindepanzernde Element 1; 1' zu bilden. Dieses Abtrennen realisiert man beispielsweise durch Schneiden, Stanzen, Scheren oder Brechen an einer vorher eingeprägten Sollbruchstelle des Drahts 90. Dieses Abtrennen im Schritt W4 erfolgt bevorzugt am Ende 88 des Gewindeabschnitts 82.

Abschließend erfolgt im Schritt W5 bevorzugt das Abspindeln des gewindepanzernden Elements 1; 1' vom Gewindeabschnitt 82 bzw. der Wickelspindel 80. Entsprechend unterschiedlicher Herstellungsverfahren wird das hergestellte gewindepanzernde Element 1; 1' optional noch bekannten Nachbearbeitungsschritten zugeführt.

Sobald die Wickelspindel 80 wieder in ihre Ausgangsposition zurückgekehrt ist, kann die erneute Herstellung eines gewindepanzernden Elements 1; 1' erfolgen.

## Patentansprüche

1. Gewindepanzerndes Element (1') in Form eines Drahtgewindeeinsatzes, das die folgenden Merkmale aufweist:
a) eine Mehrzahl von aufeinanderfolgenden wendelformigen Windungen (5), deren radiale Innenseite in der Form an ein Gewinde angepasst ist, und
b) in der Mehrzahl von aufeinanderfolgenden Windungen (5) mindestens eine aufgeweitete Wendelförmige Windung (20) aus mindestens zwei wendelförmigen Windungsabschnitten (22, 24) besteht, die eine oder eine Mehrzahl aufeinanderfolgender bogenförmiger Ausbuchtungen (26) einschließen, die die aufgeweitete wendelförmige Windung (20) radial auswärts aufweiten, wobei
c) die aufgeweitete wendelförmige Windung (20) eine Steigerung eines Einbau-Drehmoments erzeugt, sobald sie in eine Öffnung eines Bauteils eingeschraubt wird, und in dem
d) die mindestens eine aufgeweitete wendelförmige Windung (20) mindestens drei wendelförmige Windungsabschnitte (22, 24) aufweist, die an mindestens zwei Stellen eine oder eine Mehrzahl aufeinanderfolgender Ausbuchtungen (26) einschließen.

2. Gewindepanzerndes Element (1') in Form eines Drahtgewindeeinsatzes, das die folgenden Merkmale aufweist:
a) eine Mehrzahl von aufeinanderfolgenden wendelförmigen Windungen (5), deren radiale Innenseite in der Form an ein Gewinde angepasst ist, und
b) in der Mehrzahl von aufeinanderfolgenden Windungen (5) mindestens eine aufgeweitete wendelförmige Windung (20) aus mindestens zwei wendelförmigen Windungsabschnitten (22, 24) besteht, die eine oder eine Mehrzahl aufeinanderfolgender bogenförmiger Ausbuchtungen (26) einschließen, die die aufgeweitete wendelförmige Windung (20) radial auswärts aufweiten, wobei
c) die aufgeweitete wendelförmige Windung (20) eine Steigerung eines Einbau-Drehmoments erzeugt, sobald sie in eine Öffnung eines Bauteils eingeschraubt wird, und das
d) mindestens zwei aufgeweitete wendelförmige Windungen (20) aufweist, die in Längsrichtung des gewindepanzernden Elements (1') voneinander beabstandet angeordnet sind.

3. Gewindepanzerndes Element (1') in Form eines Drahtgewindeeinsatzes, das die folgenden Merkmale aufweist:
a) eine Mehrzahl von aufeinanderfolgenden wendelförmigen Windungen (5), deren radiale Innenseite in der Form an ein Gewinde angepasst ist, und
b) in der Mehrzahl von aufeinanderfolgenden Windungen (5) mindestens eine aufgeweitete wendelförmige Windung (20) aus mindestens zwei wendelförmigen Windungsabschnitten (22, 24) besteht, die eine oder eine Mehrzahl aufeinanderfolgender bogenförmiger Ausbuchtungen (26) einschließen, die die aufgeweitete wendelförmige Windung (20) radial auswärts aufweiten, wobei
c) die aufgeweitete wendelförmige Windung (20) eine Steigerung eines Einbau-Drehmoments erzeugt, sobald sie in eine Öffnung eines Bauteils eingeschraubt wird, und in dem
d) eine aufgeweitete wendelförmige Windung (20) im mittleren Bereich bezogen auf eine Länge (L) des gewindepanzernden Elements (1') angeordnet ist.

4. Gewindepanzerndes Element (1') in Form eines Drahtgewindeeinsatzes, das die folgenden Merkmale aufweist:
a) eine Mehrzahl von aufeinanderfolgenden wendelförmigen Windungen (5), deren radiale Innenseite in der Form an ein Gewinde angepasst ist, und
b) in der Mehrzahl von aufeinanderfolgenden Windungen (5) mindestens eine aufgeweitete wendelförmige Windung (20) aus mindestens zwei wendelförmigen Windungsabschnitten (22, 24) besteht, die eine oder eine Mehrzahl aufeinanderfolgender bogenförmiger Ausbuchtungen (26) einschließen, die die aufgeweitete wendelförmige Windung (20) radial auswärts aufweiten, wobei
c) die aufgeweitete wendelförmige Windung (20) eine Steigerung eines Einbau-Drehmoments erzeugt, sobald sie in eine Öffnung eines Bauteils eingeschraubt wird, und in dem
d) eine Mehrzahl von aufeinanderfolgenden wendelförmigen Windungen (30), vorzugsweise zwei bis fünf, am Anfang des gewindepanzernden Elements (1') gesehen in dessen Gangrichtung (G) einen geringeren Durchmesser aufweisen als die übrigen wendelförmigen Windungen (5) ohne Ausbuchtung (26), mit der das gewindepanzernde Element auf einem Element mit Außengewinde befestigbar ist.

5. Gewindepanzerndes Element (1') gemäß einem der Ansprüche 2 bis 4, in dem die mindestens eine aufgeweitete wendelförmige Windung (20) mindestens drei wendelförmigen Windungsabschnitte (22, 24) aufweist, die an mindestens zwei Stellen eine oder eine Mehrzahl aufeinanderfolgender Ausbuchtungen (26) einschließen.

6. Gewindepanzerndes Element (1') gemäß einem der Ansprüche 1, 3 oder 4 oder gemäß Anspruch 5 in Verbindung mit einem der Ansprüche 3 oder 4, das mindestens zwei aufgeweitete wendelförmige Windungen (20) aufweist, die in Längsrichtung des gewindepanzernden Elements (1') voneinander beabstandet angeordnet sind.

7. Gewindepanzerndes Element (1') gemäß Anspruch 6, in dem eine der aufgeweiteten wendelförmigen Windungen (20) innerhalb der ersten ein bis vier wendelförmigen Windungen bezogen auf die Gangrichtung (G) des gewindepanzernden Elements (1') angeordnet ist.

8. Gewindepanzerndes Element (1') gemäß einem der Ansprüche 1, 2 oder 4 oder gemäß Anspruch 5 in Kombination mit einem der Ansprüche 2 oder 4 oder gemäß Anspruch 6 oder 7 in Kombination mit einem der Ansprüche 1 oder 4, in dem eine aufgeweitete wendelformige Windung (20) im mittleren Bereich bezogen auf eine Länge (L) des gewindepanzernden Elements (1') angeordnet ist.

9. Gewindepanzerndes Element (1') gemäß einem der Ansprüche 1 bis 3 oder gemäß Anspruch 5 in Kombination mit einem der Ansprüche 2 oder 3 oder gemäß Anspruch 6 oder 7 in Kombination mit einem der Ansprüche 1 oder 3 oder gemäß Anspruch 8 in Kombination mit einem der Ansprüche 1 oder 2, in dem eine Mehrzahl von aufeinanderfolgenden wendelförmige Windungen (30), vorzugsweise zwei bis fünf, am Anfang des gewindepanzernden Elements (1') gesehen in dessen Gangrichtung (G) einen geringeren Durchmesser aufweisen als die übrigen wendelförmigen Windungen (5) ohne Ausbuchtung (26), mit der das gewindepanzernde Element auf einem Element mit Außengewinde befestigbar ist.

10. Schraube (S) oder eine Einbauspindel (60) oder ein Einbauwerkzeug mit einem gewindepanzernden Element (1) gemäß einem der Ansprüche 1 bis 9.

11. Installationsverfahren für eine Schraube (S) oder eine Einbauspindel (60) oder ein Einbauwerkzeug mit gewindepanzerndem Element (1), das die folgenden Merkmale aufweist: eine Mehrzahl von aufeinanderfolgenden wendelförmigen Windungen (5), zumindest deren radiale Innenseite ist in der Form an ein Gewinde angepasst, in der mindestens eine verengte wendelförmige Windung (10) aus mindestens zwei wendelförmigen Windungsabschnitten (12, 14) besteht, die eine oder eine Mehrzahl aufeinanderfolgender Sekanten (16) einschließt, die die verengte wendelförmige Windung (10) radial einwärts verengt/verengen, oder für ein Einbauwerkzeug oder eine Schraube (S) oder eine Einbauspindel mit einem gewindepanzernden Element (1'), das die folgenden Merkmale aufweist: eine Mehrzahl von aufeinanderfolgenden wendelförmigen Windungen (5), deren radiale Innenseite ist in der Form an ein Gewinde angepasst, in der mindestens eine aufgeweitete wendelförmige Windung (20) aus mindestens zwei wendelförmigen Windungsabschnitten (22, 24) besteht, die eine oder eine Mehrzahl aufeinanderfolgender Ausbuchtungen (26) einschließen, die die aufgeweitete wendelförmige Windung (20) radial auswärts aufweitet/aufweiten, in einer Öffnung (50) mit Innengewinde (52) eines Bauteils (B), wobei eine Ganghöhe pro Umdrehung des Innengewindes (52) bekannt ist und das die folgenden Schritte aufweist:
a) Einschrauben der Schraube (S) mit gewindepanzerndem Element (1; 1'), der Einbauspindel (60) mit gewindepanzerndem Element (1; 1') oder des Einbauwerkzeugs mit gewindepanzerndem Element (1; 1') in das Innengewinde (52) der Öffnung des Bauteils (B) (S1),
b) Erfassen eines Einschraub-Drehmoments (M) und eines Drehwinkels (α) des gewindepanzernden Elements (1; 1') während des Einschraubens (S2),
c) Bestimmen einer Position des gewindepanzernden Elements (1; 1') in der Öffnung (50) aus einem ersten zurückgelegten Drehwinkel (α) nach einem ersten Anstieg des Einschraub-Drehanoments (M) von einem Grund-Einschraub-Drehmoment (M₀) auf ein erstes Einschraub-Drehmoment (M₁), das ein Einlaufen der verengten wendelförmigen Windung (10) des gewindepanzernden Elements (1) oder der aufgeweiteten wendelförmigen Windung (20) des gewindepanzernden Elements (1') in die Öffnung (50) signalisiert, und der Ganghöhe (G) des Innengewindes (52) (S3).

12. Installationsverfahren nach Anspruch 11, mit den weiteren Schritten:
- Definieren eines maximalen Drehmoments (S6) und
- Beenden des Einschraubens bei Erreichen des maximalen Drehmoments (S7).

13. Installationsverfahren nach Anspruch 11 oder 12, mit dem weiteren Schritt:
Erfassen eines zweiten Anstiegs des Einschraub-Drehmoments, das ein Einlaufen einer weiteren verengten (10) oder aufgeweiteten wendelförmigen Windung (20) des gewindepanzernden Elements (1; 1') signalisiert (S4) und
Bestimmen der Position des gewindepanzernden Elements (1; 1') in der Öffnung (50) des Bauteils (B) (S5).

14. Installationsverfahren nach einem der Ansprüche 11 bis 13, mit den weiteren Schritten:
Definieren eines Prozessfensters (P) mit mindestens den Grenzen eines minimalen Drehwinkels (α_{P1}) und eines minimalen Einschraub-Drehmoments (M_{P1}),
Erfassen, ob dieses Prozessfenster (P) während der Installation durch die Einschraub-Drehmoment-Drehwinkel-Kurve erreicht wird, und
Einstufen der Installation als "in Ordnung", wenn das Prozessfenster (P) durch die Einschraub-Drehmoment-Drehwinkel-Kurve erreicht worden ist und Einstufen der Installation als "nicht in Ordnung", wenn das Prozessfenster (P) durch die Einschraube-Drehmoment-Drehwinkel-Kurve nicht erreicht worden ist.

15. Installationsverfahren gemäß Anspruch 14, mit den weiteren Schritten:
Definieren von zwei maximalen Grenzen des Prozessfensters (P) mit einem maximalen Drehwinkel (α_{P2}) und einem maximalen Einschraub-Drehmoment (M_{P2}),
Definieren von bestimmten Bedingungen eines Verlaufs der Einschraub-Drehmoment-Drehwinkel-Kurve,
Erfassen des Verlaufs des Einschraub-Drehmoments (M) in Abhängigkeit vom Drehwinkel (α) innerhalb des Prozessfensters (P) und
Einstufen der Installation als "in Ordnung", wenn bestimmte zuvor definierte Bedingungen des Verlaufs der Einschraub-Drehmoment-Drehwinkel-Kurve erfüllt sind und Einstufen der Installation als "nicht in Ordnung", wenn diese Bedingungen des Verlaufs der Einschraub-Drehmoment-Drehwinkel-Kurve nicht erfüllt sind.

16. Bauteil (B) mit einer Öffnung (50) mit Innengewinde (52) und einem darin installierten gewindepanzernden Element (1') gemäß einem der Ansprüche 1 bis 4 oder einem gewindepanzernden Element (1) mit Schraube (S) gemäß Anspruch 10.

17. Bauteil (B) gemäß Anspruch 16, in dem die Öffnung (50) eine zylindrische Einführfläche (54) ohne Innengewinde (52) aufweist.

18. Wickelspindel (80) zum Herstellen eines gewirzdepanzernden Elements (1') gemäß einem der Ansprüche 1 bis 9 aus einem Draht (90), die die folgenden Merkmale aufweist:
a) einen Befestigungskopf, über den die Wickelspindel (80) befestigbar ist, und
b) einen Gewindeabschnitt (82), der mehrere einzelne bogenförmige Erhöhungen oder eine Mehrzahl von aneinandergrenzenden Erhöhungen in Form einer Ausbuchtung aufweist.

19. Wickelspindel (80) gemäß Anspruch 18, die mehrmals eine Mehrzahl von Erhöhungen in axialer Richtung des Gewindeabschnitts (82) verteilt aufweist.

20. Wickelspindel (80) gemäß Anspruch 18, deren Mehrzahl von Erhöhungen durch zwei Spindelgewindeabschnitte (85) eingeschlossen ist.

21. Herstellungsverfahren für ein gewindepanzerndes Element (1'), nach einem der Ansprüche 1 bis 9, das die folgenden Schritte aufweist:
a) Ansetzen (W2) eines zu wickelnden Drahts (90) an einer Wickelspindel (80) gemäß einem der Ansprüche 18 bis 20,
b) Drehen (W3) der Wickelspindel (80) derart, dass der zu wickelnde Draht (90) auf die Wickelspindel (80) aufgewickelt wird und die mehreren einzelnen Erhöhungen oder die Mehrzahl aufeinanderfolgender Erhöhungen im Gewindeabschnitt (82) eine Mehrzahl von Ausbuchtungen (26) ausformt, und
c) Abtrennen (W4) des zu wickelnden Drahts (90) von dem auf die Wickelspindel (80) gewickelten Draht, so dass ein gewindepanzerndes Element (1') vorliegt, und Abspindeln (W5) des gewindepanzernden Elements (1') von der Wickelspindel (80).

## Claims

1. A thread-armoring element (1') in the shape of a wire thread insert, that has the following features:
a) a plurality of subsequent helical windings (5), the radial inside of which is adapted in shape to a thread, and
b) in the plurality of subsequent windings (5) at least one widened helical winding (20) is composed of at least two helical winding sections (22, 24), which enclose one or a plurality of subsequent arcuate bulges (26), which widen the widened helical winding (20) radially outwardly, wherein
c) the widened helical winding (20) creates an increase of an installation torque as soon as it is screwed into an opening of a component, and in which
d) the at least one widened helical winding (20) has at least three helical winding sections (22, 24), which enclose one or a plurality of subsequent bulges (26) at least at two locations.

2. A thread-armoring element (1') in the shape of a wire thread insert, that has the following features:
a) a plurality of subsequent helical windings (5), the radial inside of which is adapted in shape to a thread, and
b) in the plurality of subsequent windings (5) at least one widened helical winding (20) is composed of at least two helical winding sections (22, 24), which enclose one or a plurality of subsequent arcuate bulges (26), which widen the widened helical winding (20) radially outwardly, wherein
c) the widened helical winding (20) creates an increase of an installation torque as soon as it is screwed into an opening of a component, and that
d) has at least two widened helical windings (20) which are disposed spaced from each other in the longitudinal direction of the thread-armoring element (1').

3. A thread-armoring element (1') in the shape of a wire thread insert, that has the following features:
a) a plurality of subsequent helical windings (5), the radial inside of which is adapted in shape to a thread, and
b) in the plurality of subsequent windings (5) at least one widened helical winding (20) is composed of at least two helical winding sections (22, 24), which enclose one or a plurality of subsequent arcuate bulges (26), which widen the widened helical winding (20) radially outwardly, wherein
c) the widened helical winding (20) creates an increase of an installation torque as soon as it is screwed into an opening of a component, and in which
d) one widened helical winding (20) is disposed in the middle region with respect to a length (L) of the thread-armoring element (1').

4. A thread-armoring element (1') in the shape of a wire thread insert, that has the following features:
a) a plurality of subsequent helical windings (5), the radial inside of which is adapted in shape to a thread, and
b) in the plurality of subsequent windings (5) at least one widened helical winding (20) is composed of at least two helical winding sections (22, 24), which enclose one or a plurality of subsequent arcuate bulges (26), which widen the widened helical winding (20) radially outwardly, wherein
c) the widened helical winding (20) creates an increase of an installation torque as soon as it is screwed into an opening of a component, and in which
d) a plurality of subsequent helical windings (30), preferably two to five, at the beginning of the thread-armoring element (1') seen in its thread direction (G), have a smaller diameter than the remaining helical windings (5) without bulge (26), with which the thread-armoring element (1') can be fastened on an element with external thread.

5. The thread-armoring element (1') according to one of the claims 2 to 4, in which the at least one widened helical winding (20) has at least three helical winding sections (22, 24), which enclose one or a plurality of subsequent bulges (26) at least at two locations.

6. The thread-armoring element (1') according to one of the claims 1, 3 or 4 or according to claim 5 in combination with one of the claims 3 or 4, that has at least two widened helical windings (20) which are disposed spaced from each other in the longitudinal direction of the thread-armoring element (1').

7. The thread-armoring element (1') according to claim 6, in which one of the widened helical windings (20) is disposed within the first one to four helical windings with respect to the thread direction (G) of the thread-armoring element (1').

8. The thread-armoring element (1') according to one of the claims 1, 2 or 4 or according to claim 5 in combination with one of the claims 2 or 4 or according to claim 6 or 7 in combination with one of the claims 1 or 4, in which one widened helical winding (20) is disposed in the middle region with respect to a length (L) of the thread-armoring element (1').

9. The thread-armoring element (1') according to one of the claims 1 to 3 or according to claim 5 in combination with one of the claims 2 or 3 or according to claim 6 or 7 in combination with one of the claims 1 or 3 or according to claim 8 in combination with one of the claims 1 or 2, in which a plurality of subsequent helical windings (30), preferably two to five, at the beginning of the thread-armoring element (1') seen in its thread direction (G), have a smaller diameter than the remaining helical windings (5) without bulge (26), with which the thread-armoring element (1') can be fastened on an element with external thread.

10. Screw (S) or an installation spindle (60) or an installation tool with a thread-armoring element (1') according to one of the claims 1 to 9.

11. An installation method for a screw (S) or an installation spindle (60) or an installation tool with thread-armoring element (1) which comprises the following features: a plurality of subsequent helical windings (5), at least the radial inside of which is adapted in shape to a thread, in which at least one narrowed helical winding (10) is composed of at least two helical winding sections (12, 14), which enclose one or a plurality of subsequent secants (16), which constrict the narrowed helical winding (10) radially inwardly, or for an installation tool or a screw (S) or an installation spindle with a thread-armoring element (1') which comprises the following features: a plurality of subsequent helical windings (5), the radial inside of which is adapted in shape to a thread, in which at least one widened helical winding (20) is composed of at least two helical winding sections (22, 24), which enclose one or a plurality of subsequent bulges (26), which widen the widened helical winding (20) radially outwardly, in an opening (50) with internal thread (52) of a component (B), wherein a pitch per rotation of the internal thread (52) is known, and which has the following steps:
a) screwing-in the screw (S) with thread-armoring element (1; 1'), the installation spindle (60) with thread-armoring element (1; 1'), or the installation tool with thread-armoring element (1; 1') in the internal thread (52) of the opening of the component (B)(S1),
b) sensing a screw-in torque (M) and an angle of rotation (α) of the thread-armoring element (1; 1') during its screwing-in (S2),
c) determining a position of the thread-armoring element (1; 1') in the opening (50) from a first covered angle of rotation (α) after a first increase of the screw-in torque (M) from a base screw-in torque (M₀) to a first screw-in torque (M₁) that signals an entry of the narrowed helical winding (10) of the thread-armoring element (1) or the widened helical winding (20) of the thread-armoring element (1') in the opening (50), and the pitch (G) of the internal thread (52) (S3).

12. The installation method according to claim 11, with the further steps:
- defining a maximum torque (S6), and
- completing the screwing-in upon attaining the maximum torque (S7).

13. The installation method according to claim 11 or 12, with the further step:
sensing a second increase of the screw-in torque that signals an entering of a further narrowed (10) or widened helical winding (20) of the thread-armoring element (1; 1') (S4), and
determining the position of the thread-armoring element (1; 1') in the opening (50) of the component (B) (S5).

14. The installation method according to one of the claims 11 to 13, with the further steps:
defining a process window (P) with at least the limits of a minimum angle of rotation (α_{P1}) and a minimum screw-in torque (M_{P1}),
detecting whether this process window (P) is attained during the installation by the screw-in torque - angle of rotation curve, and
rating the installation as "OK", if the process window (P) was attained by the screw-in torque - angle of rotation curve, and rating the installation as "not OK", if the process window (P) was not attained by the screw-in torque - angle of rotation curve.

15. The installation method according to claim 14, with the further steps:
defining two maximum limits of the process window (P) with a maximum angle of rotation (α_{P2}) and a maximum screw-in torque (M_{P2}),
defining certain conditions of a course of the screw-in torque - angle of rotation curve,
sensing the course of the screw-in torque (M) depending on the angle of rotation (α) within the process window (P), and
rating the installation as "OK" if the specific previously defined conditions of the course of the screw-in torque - angle of rotation curve are satisfied, and rating the installation as "not OK" if these conditions of the course of the screw-in torque - angle of rotation curve are not satisfied.

16. A component (B) having an opening (50) with internal thread (52) and installed therein a thread-armoring element (1') according to one of the claims 1 to 4 or a thread-armoring element (1) with screw (S) according to claim 10.

17. The component (B) according to claim 16, in which the opening (50) has a cylindrical insertion surface (54) without internal thread (52).

18. A winding spindle (80) for producing a thread-armoring element (1') according to one of the claims 1 to 9 from a wire (90), which has the following features:
a) a fastening head, by means of which the winding spindle (80) can be fastened, and
b) a threaded section (82), which has several individual arcuate elevations or a plurality of successive elevations in the shape of a bulge.

19. The winding spindle (80) according to claim 18, that has several pluralities of elevations distributed in the axial direction of the threaded section (82).

20. The winding spindle (80) according to claim 18, the plurality of elevations of which is enclosed by two spindle threaded sections (85).

21. A production method for a thread-armoring element (1') according to one of the claims 1 to 9, that has the following steps:
a) placing (W2) a wire (90) to be wound on a winding spindle (80) according to one of the claims 18 to 20,
b) rotating (W3) the winding spindle (80) so that the wire (90) to be wound is wound on the winding spindle (80), and the several individual elevations or the plurality of successive elevations in the threaded section (82) forms a plurality of bulges (26), and
c) separating (W4) of the wire (90) to be wound from the wire wound on the winding spindle (80), so that a thread-armoring element (1') is present, and unwinding (W5) of the thread-armoring element (1') from the winding spindle (80).

## Revendications

1. Elément à blindage fileté (1') sous la forme d'un insert fileté en fil métallique, qui présente les caractéristiques suivantes :
a) une pluralité de spires (5) hélicoïdales successives dont le côté intérieur radial est adapté formellement à un filet, et
b) dans la pluralité de spires (5) successives, au moins une spire (20) hélicoïdale évasée se compose d'au moins deux tronçons de spire (22, 24) hélicoïdaux qui englobent un ou une pluralité de renflements (26) arqués successifs qui évasent radialement vers l'extérieur la spire (20) hélicoïdale évasée,
c) la spire (20) hélicoïdale évasée produisant une augmentation d'un couple de montage dès qu'elle est vissée dans une ouverture d'un composant, et dans lequel
d) la spire (20) hélicoïdale évasée au moins au nombre de un présente au moins trois tronçons de spire (22, 24) hélicoïdaux qui englobent dans au moins deux endroits un ou une pluralité de renflements (26) successifs.

2. Elément à blindage fileté (1') sous la forme d'un insert fileté en fil métallique, qui présente les caractéristiques suivantes :
a) une pluralité de spires (5) hélicoïdales successives dont le côté intérieur radial est adapté formellement à un filet, et
b) dans la pluralité de spires (5) successives, au moins une spire (20) hélicoïdale évasée se compose d'au moins deux tronçons de spire (22, 24) hélicoïdaux qui englobent un ou une pluralité de renflements (26) arqués successifs qui évasent radialement vers l'extérieur la spire (20) hélicoïdale évasée,
c) la spire (20) hélicoïdale évasée produisant une augmentation d'un couple de montage dès qu'elle est vissée dans une ouverture d'un composant, et qui
d) présente au moins deux spires (20) hélicoïdales évasées qui sont disposées de façon espacée entre elles dans la direction longitudinale de l'élément à blindage fileté (1').

3. Elément à blindage fileté (1') sous la forme d'un insert fileté en fil métallique, qui présente les caractéristiques suivantes :
a) une pluralité de spires (5) hélicoïdales successives dont le côté intérieur radial est adapté formellement à un filet, et
b) dans la pluralité de spires (5) successives, au moins une spire (20) hélicoïdale évasée se compose d'au moins deux tronçons de spire (22, 24) hélicoïdaux qui englobent un ou une pluralité de renflements (26) arqués successifs qui évasent radialement vers l'extérieur la spire (20) hélicoïdale évasée,
c) la spire (20) hélicoïdale évasée produisant une augmentation d'un couple de montage dès qu'elle est vissée dans une ouverture d'un composant, et dans lequel
d) une spire (20) hélicoïdale évasée est disposée dans la zone centrale, par rapport à une longueur (L) de l'élément à blindage fileté (1').

4. Elément à blindage fileté (1') sous la forme d'un insert fileté en fil métallique, qui présente les caractéristiques suivantes :
a) une pluralité de spires (5) hélicoïdales successives dont le côté intérieur radial est adapté formellement à un filet, et
b) dans la pluralité de spires (5) successives, au moins une spire (20) hélicoïdale évasée se compose d'au moins deux tronçons de spire (22, 24) hélicoïdaux qui englobent un ou une pluralité de renflements (26) arqués successifs qui évasent radialement vers l'extérieur la spire (20) hélicoïdale évasée,
c) la spire (20) hélicoïdale évasée produisant une augmentation d'un couple de montage dès qu'elle est vissée dans une ouverture d'un composant, et dans lequel
d) une pluralité de spires (30) hélicoïdales successives, de préférence deux à cinq, présentent, au début de l'élément à blindage fileté (1') vu dans la direction de son pas (G), un diamètre plus faible que les autres spires (5) hélicoïdales sans renflement (26) avec lequel l'élément à blindage fileté peut être fixé sur un élément avec un filet extérieur.

5. Elément à blindage fileté (1') selon l'une des revendications 2 à 4, dans lequel la spire (20) hélicoïdale évasée au moins au nombre de un présente au moins trois tronçons de spire (22, 24) hélicoïdaux qui englobent dans au moins deux endroits un ou une pluralité de renflements (26) successifs.

6. Elément à blindage fileté (1') selon l'une des revendications 1, 3 ou 4 ou selon la revendication 5 en lien avec l'une des revendications 3 ou 4, qui présente au moins deux spires (20) hélicoïdales évasées qui sont disposées de façon espacée entre elles dans la direction longitudinale de l'élément à blindage fileté (1').

7. Elément à blindage fileté (1') selon la revendication 6, dans lequel une des spires (20) hélicoïdales évasées est disposée à l'intérieur des une à quatre premières spires (20) hélicoïdales, par rapport à la direction du pas (G) de l'élément à blindage fileté (1').

8. Elément à blindage fileté (1') selon l'une des revendications 1, 2 ou 4 ou selon la revendication 5 en combinaison avec l'une des revendications 2 ou 4 ou selon la revendication 6 ou 7 en combinaison avec l'une des revendications 1 ou 4, dans lequel une spire (20) hélicoïdale évasée est disposée dans la zone centrale, par rapport à une longueur (L) de l'élément à blindage fileté (1').

9. Elément à blindage fileté (1') selon l'une des revendications 1 à 3 ou selon la revendication 5 en combinaison avec l'une des revendications 2 ou 3 ou selon la revendication 6 ou 7 en combinaison avec l'une des revendications 1 ou 3 ou selon la revendication 8 en combinaison avec l'une des revendications 1 ou 2, dans lequel une pluralité de spires (30) hélicoïdales successives, de préférence deux à cinq, présentent, au début de l'élément à blindage fileté (1') vu dans la direction de son pas (G), un diamètre plus faible que les autres spires (5) hélicoïdales sans renflement (26) avec lequel l'élément à blindage fileté peut être fixé sur un élément avec filet extérieur.

10. Vis (S) ou une broche de montage (60) ou un outil de montage avec un élément à blindage fileté (1) selon l'une des revendications 1 à 9.

11. Procédé d'installation pour une vis (S) ou une broche de montage (60) ou un outil de montage avec élément à blindage fileté (1), qui présente les caractéristiques suivantes : une pluralité de spires (5) hélicoïdales successives, dont au moins le côté radial est adapté formellement à un filet, dans laquelle au moins une spire (10) hélicoïdale rétrécie se compose d'au moins deux tronçons de spire (12, 14) hélicoïdaux qui englobent une ou une pluralité de sécantes (16) successives qui rétrécit/rétrécissent radialement vers l'intérieur la spire (10) hélicoïdale rétrécie, ou pour un outil de montage ou une vis (S) ou une broche de montage avec un élément à blindage fileté (1') qui présente les caractéristiques suivantes : une pluralité de spires (5) hélicoïdales successives dont le côté intérieur radial est adapté formellement à un filet, dans laquelle au moins une spire (20) hélicoïdale évasée se compose d'au moins deux tronçons de spire (22, 24) hélicoïdaux qui englobent une ou une pluralité de renflements (26) successifs qui évase/évasent radialement vers l'extérieur la spire (20) hélicoïdale évasée, dans une ouverture (50) avec filet intérieur (52) d'un composant (B), un pas par rotation du filet intérieur (52) étant connu et qui présente les étapes suivantes :
a) vissage de la vis (S) avec élément à blindage fileté (1 ; 1'), de la broche de montage (60) avec élément à blindage fileté (1 ; 1') ou de l'outil de montage avec élément à blindage fileté (1 ; 1') dans le filet intérieur (52) de l'ouverture du composant (B) (S1),
b) détection d'un couple de vissage (M) et d'un angle de rotation (α) de l'élément à blindage fileté (1 ; 1') pendant le vissage (S2),
c) détermination d'une position de l'élément à blindage fileté (1 ; 1') dans l'ouverture (50) à partir d'un premier angle de rotation (α) parcouru après une première augmentation du couple de vissage (M) à partir d'un couple de vissage de base (M₀) jusqu'à un premier couple de vissage (M₁) qui signale une entrée de la spire (10) hélicoïdale rétrécie de l'élément à blindage fileté (1) ou de la spire (20) hélicoïdale évasée de l'élément à blindage fileté (1') dans l'ouverture (50), et du pas (G) du filet intérieur (52) (S3).

12. Procédé d'installation selon la revendication 11, avec les étapes supplémentaires :
- détermination d'un couple maximal (S6) et
- arrêt du vissage lors de l'obtention du couple maximal (S7) .

13. Procédé d'installation selon la revendication 11 ou 12, avec l'étape suivante :
Détection d'une deuxième augmentation du couple de vissage qui signale une entrée d'une autre spire (10) hélicoïdale rétrécie supplémentaire ou d'une autre spire (20) hélicoïdale évasée de l'élément à blindage fileté (1 ; 1') (S4) et
détermination de la position de l'élément à blindage fileté (1, 1') dans l'ouverture (50) du composant (B) (S5).

14. Procédé d'installation selon l'une des revendications 11 à 13, avec les étapes suivantes :
définition d'une fenêtre de process (P) avec au moins les limites d'un angle de rotation minimal (α_{P1}) et d'un couple de vissage minimal (M_{P1}),
détection indiquant si cette fenêtre de process (P) est atteinte pendant l'installation par la courbe couple de vissage-angle de rotation, et
qualification de l'installation comme « correcte » si la fenêtre de process (P) a été atteinte par la courbe couple de vissage-angle de rotation, et qualification de l'installation comme « non correcte » si la fenêtre de process (P) n'a pas été atteinte par la courbe couple de vissage-angle de rotation.

15. Procédé d'installation selon la revendication 14, avec les étapes supplémentaires :
Définition de deux limites maximales de la fenêtre de process (P) avec un angle de rotation maximal (α_{P2}) et un couple de vissage maximal (M_{P2}),
définition de conditions définies d'une allure de la courbe couple de vissage-angle de rotation,
détection de l'allure du couple de vissage (M) en fonction de l'angle de rotation (α) à l'intérieur de la fenêtre de process (P) et
qualification de l'installation comme « correcte » si certaines conditions définies au préalable de l'allure de la courbe couple de vissage-angle de rotation sont remplies, et qualification de l'installation comme « non correcte » si ces conditions de l'allure de la courbe couple de vissage-angle de rotation ne sont pas remplies.

16. Composant (B) avec une ouverture (50) avec filet intérieur (52) et avec un élément à blindage fileté (1') installé à l'intérieur selon l'une des revendications 1 à 4 ou avec un élément à blindage fileté (1) avec vis (S) selon la revendication 10.

17. Composant (B) selon la revendication 16, dans lequel l'ouverture (50) présente une surface d'introduction cylindrique (54) sans filet intérieur (52).

18. Broche d'enroulement (80) pour la fabrication d'un élément à blindage fileté (1') selon l'une des revendications 1 à 9 à partir d'un fil métallique (90), qui présente les caractéristiques suivantes :
a) une tête de fixation par le biais de laquelle la broche d'enroulement (80) peut être fixée, et
b) un tronçon fileté (82) qui présente plusieurs surélévations arquées individuelles ou une pluralité de surélévations contiguës sous la forme d'un renflement.

19. Broche d'enroulement (80) selon la revendication 18, qui présente plusieurs fois une pluralité de surélévations réparties dans la direction axiale du tronçon fileté (82).

20. Broche d'enroulement (80) selon la revendication 18, dont la pluralité de surélévations sont englobées par deux tronçons filetés de broche (85).

21. Procédé de fabrication pour un élément à blindage fileté (1'), selon l'une des revendications 1 à 9, qui présente les étapes suivantes :
a) pose (W2) d'un fil métallique (90) à enrouler sur une broche d'enroulement (80) selon l'une des revendications 18 à 20,
b) rotation (W3) de la broche d'enroulement (80) de telle sorte que le fil métallique (90) à enrouler est enroulé sur la broche d'enroulement (80), et les plusieurs surélévations individuelles ou la pluralité de surélévations successives dans le tronçon fileté (82) forment une pluralité de renflements (26), et
c) séparation (W4) opérée entre le fil métallique (90) à enrouler et le fil métallique enroulé sur la broche d'enroulement (80) de telle sorte que l'on a un élément à blindage fileté (1'), et dévissage (W5) de l'élément à blindage fileté (1') par rapport à la broche d'enroulement (80).
